# EUROPEAN PATENT SPECIFICATION

(11) **EP 2 996 318 B1**
(45) Date of publication and mention of the grant of the patent: **12.09.2018**
(21) Application number: 13883979.0
(22) Date of filing: 31.10.2013
(51) Int. Cl.: H04M 15/00, H04M 17/00, H04W 4/24

(54) **MANAGEMENT DEVICE AND COMPUTER PROGRAM**
VERWALTUNGSVORRICHTUNG UND COMPUTERPROGRAMM
DISPOSITIF DE GESTION ET PROGRAMME INFORMATIQUE

(30) Priority: 07.05.2013 JP 2013097956; 20.05.2013 WO PCT/JP2013/063991
(43) Date of publication of application: 16.03.2016
(73) Proprietor: Suncorporation, Konan-shi Aichi 483-8555 (JP)
(72) Inventor: KOJIMA Osamu, Konan-shi Aichi 483-8555 (JP)
(74) Representative: Winter, Brandl, Fürniss, Hübner, Röss, Kaiser, Polte - Partnerschaft mbB
(86) International application number: PCT/JP2013/079540
(87) International publication number: WO 2014/181485

(56) References cited:
- EP-A2- 2 525 554
- WO-A1-2013/053788
- JP-A- 2002 039 659
- JP-A- 2009 161 345
- JP-A- 2010 056 958
- JP-A- 2012 199 751
- JP-A- 2012 213 095
- US-A1- 2007 214 368
- US-A1- 2012 142 314
- US-A1- 2012 282 891
- US-A1- 2012 299 709

## Description

### Technical Field

The technique disclosed in this description relates to an administration device that administers target data being an administration target.

### Background Art

For example, Japanese Patent Application Publication No. 2002-300254 (hereafter referred to as Patent Document 1) discloses a cell phone that provides a telephony service by mounting a SIM (Subscriber Identification Module) card in which a telephone number of a subscriber is registered. This cell phone can make calls when the SIM card is mounted on a cell phone main body, and calling fees are billed to a user of the SIM card.Other examples of related prior art are: WO 2013/053788 and JP2012213095.

### Summary of Invention

### Technical Problem

Conventionally, various terminal devices such as the cell phone in Patent Document 1, by which communications are enabled when a SIM card is mounted thereon, are known. There may be a case where an administration device that acquires target data being an administration target via a server from such terminal devices, and administers the target data is used.

Information (SIM-related information; which is an example of subscriber-identification-information-related information) necessary for billing the user of the SIM card (which is an example of a subscriber identification information storage medium) is stored in a server provided by a provider (carrier) who provides a communication service. In the conventional technique, there had been no consideration to displaying a screen using a SIM-related information on a display unit of a terminal such as a PC, which the SIM card user possesses. For example, the SIM card user may in some cases, where a communication state is not desirable for the SIM card user, desire to identify a cause thereof by referring to the SIM-related information.

In the present description, a technique for appropriately displaying a screen of high convenience for a user of a subscriber identification information storage medium is provided.

### Solution to Technical Problem

The present invention is defined in the attached independent claims. Further, preferred embodiments may be found in the dependent claims appended thereto.

### Brief Description of Drawings

FIG. 1 shows a configuration of a communication system.
FIG. 2 shows a sequence chart in a normal operation.
FIG. 3 shows a target data display screen.
FIG. 4 shows a sequence chart in an error operation.
FIG. 5 shows a screen transition (1) in a PC upon a data acquisition error.
FIG. 6 shows the screen transition (2) in the PC upon the data acquisition error.
FIG. 7 shows the screen transition (3) in the PC upon the data acquisition error.
FIG. 8 shows the screen transition (4) in the PC upon the data acquisition error.
FIG. 9 shows a screen transition (1) in the PC upon a change to Disable.
FIG. 10 shows the screen transition (2) in the PC upon the change to Disable.
FIG. 11 shows the screen transition (3) in the PC upon the change to Disable.
FIG. 12 shows the screen transition (4) in the PC upon the change to Disable.
FIG 13 shows a screen transition (1) in the PC upon a data amount abnormality.
FIG. 14 shows the screen transition (2) in the PC upon the data amount abnormality.
FIG 15 shows a screen transition (1) in the PC upon an area abnormality.
FIG. 16 shows the screen transition (2) in the PC upon the area abnormality.
FIG. 17 shows a screen transition in the PC upon a data corruption.
FIG. 18 shows a flowchart of a determination process.

### Description of Embodiments

Some of technical features will be listed for the embodiments explained below. Technical features described below are respective independent features which provide technical utility either independently or through various combinations and which are not limited to the combinations described at the time the claims are filed.

(Feature 1) In a first situation, the first display controlling unit may create first terminal-related display data, and may make the display unit display a first terminal-related screen represented by the first terminal-related display data, in a second situation different from the first situation, the first display controlling unit may create second terminal-related display data different from the first terminal-related display data, and may make the display unit display a second terminal-related screen represented by the second terminal-related display data. The second terminal-related screen is different from the first terminal-related screen. In a third situation, the second display controlling unit may create first subscriber-identification-information-related display data, and may make the display unit display a first subscriber-identification-information-related screen represented by the first subscriber-identification-information-related display data. In a fourth situation different from the third situation, the second display controlling unit may create second subscriber-identification-information-related display data different from the first subscriber-identification-information-related display data, and may make the display unit display a second subscriber-identification-information-related screen represented by the second subscriber-identification-information-related display data. The second subscriber-identification-information-related screen is different from the first subscriber-identification-information-related screen.

According to this configuration, the administration device can appropriately switch among the first terminal-related screen, the second terminal-related screen, the first subscriber-identification-information-related screen, and the second subscriber-identification-information-related screen and display the same on the display unit according to situations (e.g., , with convenience for the user as a factor of determination).

(Feature 2) The first display controlling unit may create the terminal-related display data by using the target data.

According to this configuration, the administration device can display the terminal-related screen, which is represented by the terminal-related display data created using the target data, on the display unit. A user of the administration device can appropriately know about the target data by looking at the terminal-related screen.

(Feature 3) The subscriber identification information storage medium may be set in one of a valid state and an invalid state. The first acquiring unit may acquire the target data via the server from the terminal device mounting the subscriber identification information storage medium that is set in the valid state, and may not acquire the target data via the server from the terminal device mounting the subscriber identification information storage medium that is set in the invalid state. The controller may further comprise: a changing instruction outputting unit configured to output a changing instruction for changing a state of the subscriber identification information storage medium.

According to this configuration, the state of the subscriber identification information storage medium mounted on the terminal device can be changed in accordance with the changing instruction outputted by the administration device. Thus, the state of the subscriber identification information storage medium may be changed in accordance with an instruction from a person other than the user of the server (e.g., user of the administration device).

(Feature 4) The controller may further comprise: a determining unit configured to determine whether an error has occurred or not. In a case where it is determined by the determining unit that the error has occurred, the first display controlling unit may create the terminal-related display data including notification information indicating that the error has occurred.

According to this configuration, the administration device can display the terminal-related screen represented by the terminal-related display data including the notification information on the display unit. The user of the administration device can appropriately know that an error has occurred by looking at the terminal-related screen.

(Feature 5) The controller may further comprise: a determining unit configured to determine whether an error has occurred or not. In a case where it is determined by the determining unit that the error has occurred, the second display controlling unit may create the subscriber-identification-information-related display data including notification information indicating that the error has occurred.

According to this configuration, the administration device can display subscriber-identification-information-related screen represented by the subscriber-identification-information-related display data including the notification information on the display unit. The user of the administration device can appropriately know that an error has occurred by looking at the subscriber-identification-information-related screen.

(Feature 6) The determining unit may determine that the error has occurred in a first case where the target data cannot be acquired from the terminal device via the server.

In the case where the target data cannot be acquired via the server from the terminal device, there is a possibility that some sort of error is occurring in a communication passage or the like. According to the above configuration, the user of the administration device can appropriately know of the possibility that some sort of error is occurring.

(Feature 7) In the first case, the determining unit may further determine that: a specific type of error has occurred in a specific case where a state of the terminal device is a communication-available state being a state capable of performing a wireless communication; and a type of error that is different from the specific type of error has occurred in a case where the state of the terminal device is a communication-unavailable state being a state incapable of performing the wireless communication.

According to this configuration, in the case where the target data cannot be acquired via the server from the terminal device, the user of the administration device can appropriately know of the possibility that some sort of error is occurring, and an approximate cause of the error.

(Feature 8) The controller may further comprise: a sending unit configured to send a confirmation signal to the terminal device in the specific case. In the specific case, the determining unit may further determine that: a first specific type of error has occurred in a case where a response signal in response to the confirmation signal is received from the terminal device; and a second specific type of error different from the first specific type of error has occurred in a case where the response signal is not received from the terminal device.

According to this configuration, in the case where the target data cannot be acquired via the server from the terminal device, the user of the administration device can appropriately know of the possibility that some sort of error is occurring, and an approximate cause of the error.

(Feature 9) The subscriber identification information storage medium may be set in one of a valid state and an invalid state. The first acquiring unit may acquire the target data via the server from the terminal device mounting the subscriber identification information storage medium that is set in the valid state, and does not acquire the target data via the server from the terminal device mounting the subscriber identification information storage medium that is set in the invalid state. The determining unit may determine that the error has occurred in a second case where a state of the subscriber identification information storage medium is changed from the valid state to the invalid state.

For example, there may be a case where the state of the subscriber identification information storage medium mounted on the terminal device is changed from the valid state to the invalid state while the user of the administration device is not aware of this. In this case, an incident in which the target data cannot be acquired from the terminal device while the user of the administration device is not aware of this may happen. According to the above configuration, the user of the administration device can appropriately know that the state of the subscriber identification information storage medium is changed from the valid state to the invalid state.

(Feature 10) The determining unit may determine that the error has occurred in a third case where a difference between a first data amount of first target data outputted from the terminal device to the server and a second data amount of second target data acquired from the terminal device via the server is equal to or more than a predetermined amount.

In the case where the difference between the first data amount of the first target data outputted from the terminal device to the server and the second data amount of the second target data acquired from the terminal device via the server is equal to or more than the predetermined amount, there is a possibility that a trouble such as a part of the target data having been lost while being outputted to the administration device from the terminal device via the server, for example, is occurring. According to the above configuration, the user of the administration device can appropriately know of the possibility that the trouble such as a part of the target data having been lost while being outputted to the administration device from the terminal device via the server is occurring.

(Feature 11) The determining unit may determine that the error has occurred in a fourth case where the terminal device exists outside of a predetermined area.

In the case where the terminal device exists outside of the predetermined area, there is a possibility that a trouble such as the terminal device having been stolen and carried away to the outside of the predetermined area, for example, is occurring. According to the above configuration, the user of the administration device can appropriately know of the possibility that some sort of trouble is occurring to the terminal device.

(Feature 12) The determining unit may determine that the error has occurred in a fifth case where information included in the target data is corrupted.

In the case where the information included in the target data is corrupted, there is a possibility that some sort of error is occurring in the terminal device, a communication passage, or the like. According to the above configuration, the user of the administration device can appropriately know of the possibility that some sort of error is occurring.

(Feature 13) The controller may further comprise: a third acquiring unit configured to acquire, from the terminal device that further comprises a communication module, module-related information related to a process that the communication module executes; and a third display controlling unit configured to create module-related display data including at least the module-related information, and make the display unit display a module-related screen represented by the module-related display data.

According to this configuration, the administration device can make the module-related screen, which is represented by the module-related display data that includes the module-related information, displayed on the display unit. The user of the administration device can appropriately know about the module-related information by looking at the module-related screen.

### (First Embodiment)

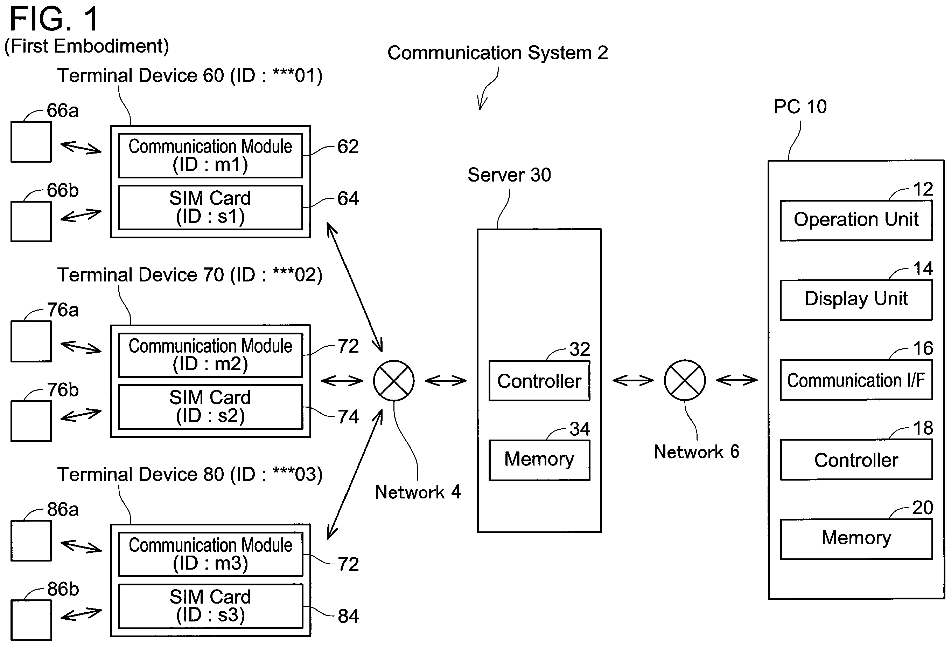

### (Configuration of Communication System 2; FIG. 1)

As shown in FIG. 1, a communication system 2 comprises a PC 10, a server 30, and terminal devices 60, 70, 80. In FIG. 1, explanation is given by exemplifying only three terminal devices, namely the terminal devices 60, 70, 80, however, in actuality, there are numbers of terminal devices similar to the terminal devices 60, 70, 80. The PC 10 and the server 30 can communicate with each other via a network 6. The network 6 is for example wired Internet. In another example, the network 6 may be wireless Internet. Further, the server 30 and the terminal devices 60, 70, 80 can communicate wirelessly with each other via a network 4. Although it will be described later in detail, in the communication system 2 of the present embodiment, the server 30 is a server that is provided by a wireless communication service provider (which may hereafter be referred to as a carrier). In the present embodiment, the network 4 is a mobile network provided by the carrier. In the present embodiment, the terminal devices 60, 70, 80 and the server 30 can perform wireless communication provided by the carrier via the network 4.

### (Configuration of Terminal Devices 60, 70, 80)

The terminal device 60 is a terminal device, for example such as an in-vehicle telephony or an in-vehicle PC, that can be mounted on a mobile article such as a vehicle. In another example, the terminal device 60 may for example be a portable terminal, such as a cell phone (e.g., smartphone), a PDA, a laptop PC, a tablet PC, a portable music player, or a portable movie player. The terminal device 60 comprises a communication module 62, and a SIM (Subscriber Identification Module) card 64.

The terminal device 60 is given a unique ID (Identification Information) for identifying the terminal device 60. In the example of FIG. 1, the terminal device 60 is given an ID (hereafter referred to as a terminal ID) "***01".

The communication module 62 is a module for performing a wireless communication via the network 4 with the server 30. The communication module 62 is given a unique module ID for identifying the communication module 62. In the example of FIG 1, the communication module 62 is given a module ID "m1".

The SIM card 64 is a memory card for storing unique identification information, such as a phone number of the terminal device 60, given to a user of the terminal device 60. The SIM card 64 is mounted on the terminal device 60. The SIM card 64 is set to a state that is one of an Enable state and a Disable state. The terminal device 60 comes to be in a state in which the wireless communication provided by the carrier (wireless communication using the network 4) can be performed by the SIM card 64 in the Enable state being mounted on the terminal device 60. Hereafter, this state may be termed an ACTIVE state. In this case, the user of the SIM card 64 begins to be billed accompanying the communication performed using the terminal device 60. The billing methods will be described later. On the other hand, even if the SIM card 64 in the Disable state is mounted on the terminal device 60, the terminal device 60 cannot perform the wireless communication provided by the carrier. Hereinbelow, this state may be termed a NOT ACTIVE state. In this case, there will be no bills incurred. As will be described later, in the present embodiment, the state of the SIM card 64 mounted on the terminal device 60 can be switched between the Enable state and the Disable state by the server 30 and the PC 10.

The SIM card 64 is given a unique ID (SIM ID) for identifying the SIM card 64. In the example of FIG. 1, the SIM card 64 is given an SIM ID "s1". The SIM ID is for example a unique ID number for identifying a phone number.

Further, the terminal device 60 can perform near field communication with luggages 66a, 66b that are present nearby. The near field communication is a wireless communication complying to a communication scheme of an NFC standard (i.e., NFC scheme). The terminal device 60 comprises an NFC interface (not shown) for performing the near field communication. In the present embodiment, the luggages 66a, 66b are for example luggages carried on a vehicle provided with the terminal device 60. The luggages 66a, 66b each have a communication device that is not shown. The communication devices provided in the luggages 66a, 66b comprise NFC interfaces (not shown) for performing the near field communication with the terminal device 60. Notably, although only two luggages, namely the luggages 66a, 66b, are shown in the example of FIG. 1, there may be other luggages in a vicinity of the terminal device 60. Further, the communication devices provided in the luggages 66a, 66b each gather and store respective information, such as a surrounding temperature, humidity, and location information (location information specified by using a GPS (Global Positioning System)).

In the present embodiment, the terminal device 60 performs the near field communication with the luggages 66a, 66b once every predetermined time (e.g., every 5 minutes) and acquires information from the luggages 66a, 66b. Contents of the information acquired from the luggages 66a, 66b are the respective information (surrounding temperature, humidity, location information, etc.). The terminal device 60 makes the respective information as acquired be stored in an internal memory (not shown).

In the present embodiment, the terminal device 60 outputs the respective information in the memory (information for one hour) once every predetermined time (e.g., every one hour) to the server 30 via the network 4. This information for one hour may be termed "target data" hereinafter. The target data includes the terminal ID (***01) of the terminal device 60, the SIM ID (s1) of the SIM card 64, and the module ID (ml) of the communication module.

The terminal device 70 comprises an identical configuration as that of the terminal device 60. As shown in FIG. 1, the terminal device 70 similarly comprises a communication module 72 and a SIM card 74. The terminal device 70 is given a terminal ID "***02". The communication module 72 is given a module ID "m2". The SIM card 74 is given a SIM ID "s2". The terminal device 70 similarly performs near field communication with luggages 76a, 76b that are present nearby, and acquires respective information from the luggages 76a, 76b.

The terminal device 80 comprises an identical configuration as that of the terminal device 60. As shown in FIG. 1, the terminal device 80 similarly comprises a communication module 82 and a SIM card 84. The terminal device 80 is given a terminal ID "***03". The communication module 82 is given a module ID "m3". The SIM card 84 is given a SIM ID "s3". The terminal device 80 similarly performs near field communication with luggages 86a, 86b that are present nearby, and acquires respective information from the luggages 86a, 86b.

Hereinbelow, in the present embodiment, an example in which the terminal devices 60, 70, 80 perform respective processes will be given with the terminal device 60 as a representative thereof, however, identical processes are performed in cases for the terminals 70, 80 as well.

### (Configuration of Server 30)

The server 30 is a server that is provided by the carrier. The server 30 comprises a controller 32 and a memory 34. The controller 32 performs various processes according to a program stored in the memory 34. The memory 34 is configured of a ROM, a RAM, a hard disk, and the like. The memory 34 stores the program to be executed by the controller 32. Further, although not shown, the server 30 further comprises communication interfaces for performing communications with the terminal devices 60, 70, 80 and the PC 10.

In the present embodiment, the controller 32 acquires target data via the network 4 once every predetermined time (e.g., every one hour) from the terminal devices 60 (70, 80). The controller 32 outputs the acquired target data to the PC 10 via the network 6. That is, the target data outputted by the terminal device 60 is outputted as it is to the PC 10 through the server 30.

The controller 32 outputs the target data to the PC 10, also creates SIM-related information related to a SIM card for each of the SIM cards based on the target data, and makes the same be stored in the memory 34. Specifically, the controller 32 references the target data and creates information necessary for billing a user of the SIM card 64 (SIM-related information), such as a data amount (number of packets) of the target data, a communication time, a communication area, and carrier information. The controller 32 makes the created SIM-related information be stored in the memory 34 by associating it with the SIM ID (s1) included in the target data. The carrier that provides the server 30 bills the user of the SIM card 64 according to contents of the SIM-related information stored in the memory 34. In another example, in addition to the aforementioned respective information (data amount of the target data, communication time, communication area, and carrier information), the SIM-related information may further include a SMS (Short Message Service) message, transmission dates of the SMS message, number of packets, and destination.

The memory 34 further stores a setting as to which of the Enable state and the Disable state a state of the SIM card 64 (74, 84) is being set. More specifically, the memory 34 stores the SIM ID of each SIM card in association with its state (Enable state or Disable state). When a changing instruction for changing a state of a SIM card 64 is acquired from another device such as the PC 10, the controller 32 changes (switches) the state of the SIM card 64. Further, the controller 32 changes the state of the SIM card 64 also in a case where the changing instruction for changing the state of the SIM card 64 is inputted by the user of the server 30 from an operation unit (not shown) of the server 30. As described above, when the state of the SIM card 64 is switched to the Enable state, the terminal device 60 comes to be in a state where the wireless communication provided by the carrier can be performed (ACTIVE state). On the other hand, when the state of the SIM card 64 is switched to the Disable state, the terminal device 60 comes to be in a state where the wireless communication provided by the carrier cannot be performed (NOT ACTIVE state).

### (Configuration of PC 10)

The PC 10 functions as an administration device for administering the target data outputted from the terminal devices 60 (70, 80). The PC 10 comprises an operation unit 12, a display unit 14, a communication interface 16, a controller 18, and a memory 20. The operation unit 12 is configured of a keyboard and a mouse. The display unit 14 is a display for displaying various types of information. The communication interface 16 is an interface for enabling the controller 18 to perform communication with the server 30 via the network 6.

The controller 18 performs various processes according to a program stored in the memory 20. The memory 20 is configured of a ROM, a RAM, a hard disk, and the like. The memory 20 stores the program to be executed by the controller 18. Further, the memory 20 stores the target data acquired from the terminal devices 60 (70, 80) via the server 30. Further, the memory 20 also stores respective setting information and the like.

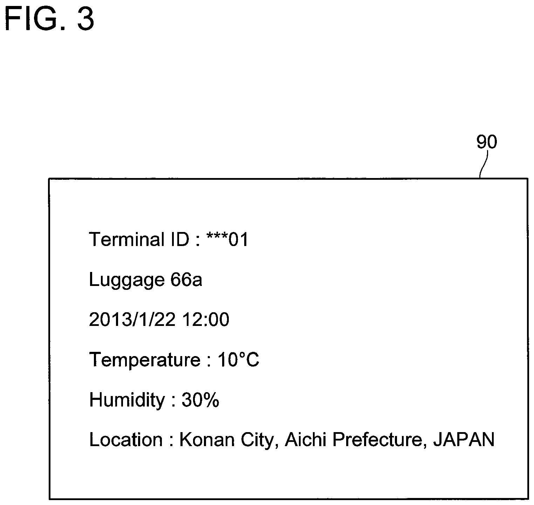

In the present embodiment, when the target data is acquired from the terminal devices 60 (70, 80) via the server 30 (i.e., when the target data is acquired from the server 30 via the network 6), the controller 18 makes the target data be stored in the memory 30 for each terminal device. Specifically, the controller 18 stores (accumulates) the target data in the memory 20 for each of the terminal IDs (***01) included in the target data. As will be described later, when a predetermined display instruction is inputted via the operation unit 12, the controller 18 creates a screen data (see FIG 3) for a target data display screen using the target data stored in the memory 20, and make the target data display screen (see FIG. 3) be displayed on the display unit 14 in accordance with the screen data.

The memory 20 further stores the terminal ID (e.g., "***01"), the SIM ID (e.g., "s1"), and the module ID (e.g., "m1") of each terminal device in association. As above, the terminal ID, the SIM ID, and the module ID of each terminal device are included in the target data acquired from the corresponding terminal device.

The memory 20 further stores various settings for the communication system 2. The settings of the communication system 2 include an information acquisition interval, a target data acquisition interval, a target area, a threshold of data amount difference, an alert setting, and the like. The information acquisition interval indicates an interval by which the terminal device 60 acquires information from the nearby luggages 66a, etc. (e.g., five minutes). The target data acquisition interval indicates an interval by which the PC 10 acquires the target data from the terminal device 60 via the server 30 (e.g., one hour). The target area indicates a range where the terminal device 60 should be present (e.g., Konan city, Aichi prefecture, Japan). The threshold of data amount difference indicates a threshold of a difference to be generated between a data amount of the target data that the server 30 acquires from the terminal device 60 (i.e., data amount of the target data outputted from the terminal device 60) and a data amount of the target data that the PC 10 acquires. As will be described later, the controller 18 determines that an error is occurring in a case where the difference exceeds the threshold. The alert setting indicates for which of errors, among predeterminedly set plural types of errors (data acquisition abnormality, change to Disable, data amount abnormality, area abnormality, and data corruption), a notification (alert) regarding an occurrence of the error should be performed. The user of the PC 10 can operate the operation unit 12 to set the respective setting values as above. That is, the user of the PC 10 can set what sort of situations should be considered as an error. In the present embodiment, the terminal devices 60 (70, 80), the server 30, and the PC 10 operate in accordance with the respective setting values stored in the memory 20.

The memory 20 further stores which state of the Enable state and the Disable state the SIM cards 64 (74, 84) are set in. Specifically, the memory 20 stores the SIM ID of each SIM card and the state (Enable state or Disable state) in association. The user of the PC 10 can operate the operation unit 12 to input the changing instruction for changing the state of the SIM card 64. When the changing instruction is acquired via the operation unit 12, the controller 18 outputs the changing instruction for changing the state of the SIM card 64 to the server 30. Further, the controller 18 changes the state of the SIM card 64 stored in the memory 20 in accordance with the changing instruction.

In the present embodiment, there may be a case where a content of the state (Enable state or Disable state) of each SIM card as stored in the memory 20 of the PC 10 and a content of the state of each SIM card as stored in the memory 34 of the server 30 are different. For example, when the server 30 acquires the changing instruction for changing the state of the SIM card 64 from another device (not shown) different from the PC 10, the controller 32 changes the state of the SIM card 64. In such a case, the content of the state (Enable state or Disable state) of each SIM card as stored in the memory 20 of the PC 10 and the content of the state of each SIM card as stored in the memory 34 of the server 30 become different.

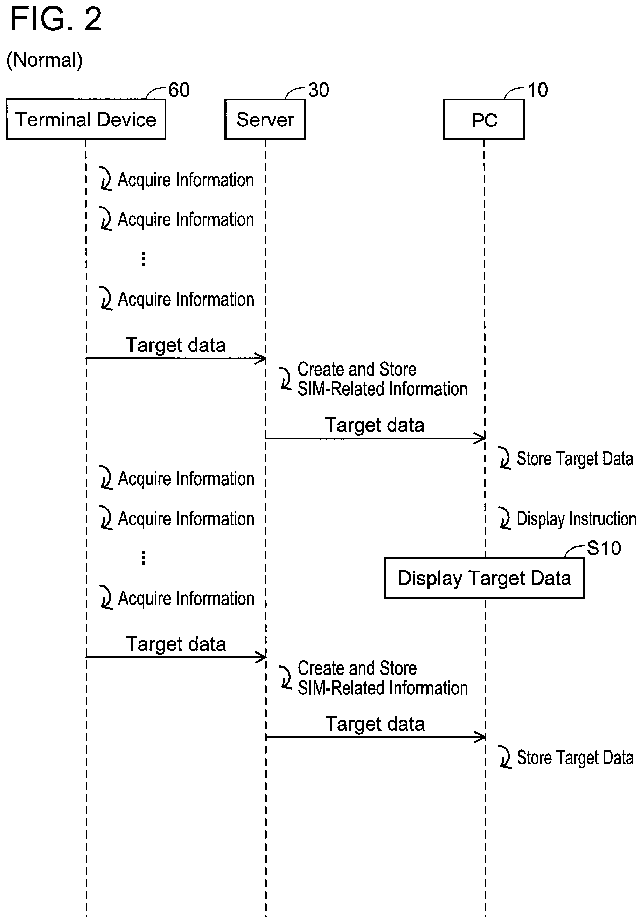

### (Communication in Normal Operation; FIG. 2)

By referring to FIG. 2, an example of a communication performed between the terminal device 60, server 30, and PC 10 in a normal operation (during when no error is occurring) will be described.

In the example of FIG. 2, the SIM card 64 in the Enable state is mounted on the terminal device 60. The terminal device 60 performs the near field communication with the nearby luggages 66a, 66b every five minutes, and acquires the respective information (surrounding temperature, humidity, location information, etc.) from the luggages 66a, 66b. The terminal device 60 makes the acquired information be stored in the internal memory. The terminal device 60 outputs the respective information stored in the memory (i.e., target data) to the server 30 via the network 4 every one hour.

When the target data outputted by the terminal device 60 is acquired, the controller 32 of the server 30 outputs the acquired target data to the PC 10 via the network 6. That is, the target data outputted by the terminal device 60 is outputted as it is to the PC 10 through the server 30.

The controller 32 outputs the target data to the PC 10, also creates SIM-related information related to a SIM card for each of the SIM cards based on the target data, and makes the same be stored in the memory 34. The contents of the SIM-related information are as aforementioned. The controller 32 makes the created SIM-related information be stored in the memory 34 by associating it with the SIM ID (s1) included in the target data.

The controller 18 of the PC 10 monitors an occurrence of an error. However, as aforementioned, the example of FIG 2 assumes an example in which no error occurs.

When the target data outputted by the server 30 is acquired, the controller 18 of the PC 10 makes the target data be stored in the memory 20. In the example of FIG. 2, the user of the PC 10 operates the operation unit 12 thereafter to input the display instruction of the target data. When the display instruction is inputted, the controller 18 creates display data for displaying the target data by using the target data stored in the memory 20, and makes the display unit 14 display a target data display screen 90 (FIG. 3) represented by the display data (S10).

FIG 3 shows an example of the target data display screen 90. The target data display screen 90 displays the respective information, such as the terminal ID (***01), luggage information (66a), date information (2013/01/22 12:00), temperature (10°C), humidity (30%), and location (Konan city, Aichi prefecture, Japan). The user of the PC 10 can operate the operation unit 12 to input a switch instruction for displayed contents. The controller 18 switches the contents of the target data display screen displayed in the display unit 14 according to the switch instruction that is inputted. Further, when the user of the PC 10 inputs a display termination instruction, the controller 18 terminates the display of the target data display screen 90.

As shown in FIG. 2, the terminal device 60 performs the near field communication with the nearby luggages 66a, 66b every five minutes during when the controller 18 of the PC 10 is making the display unit 14 display the target data display screen 90 (FIG. 3), and acquires the respective information (surrounding temperature, humidity, location information, etc.) from the luggages 66a, 66b. The same as above applies to the oncoming processes.

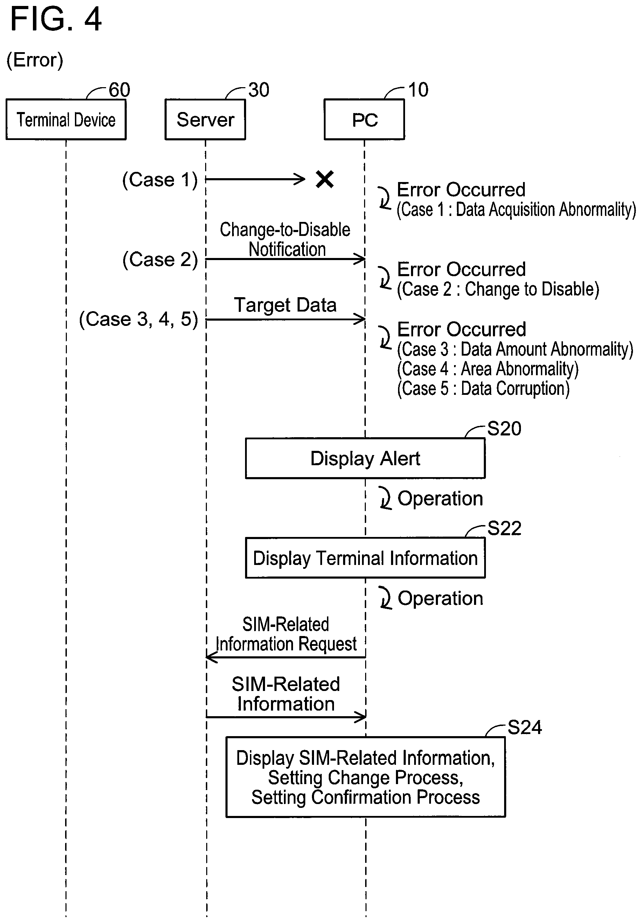

### (Communication in Error Operation; FIG. 4)

Next, an example of a communication performed between the terminal device 60, the server 30, and the PC 10 in an error operation (in a case where an error occurs) will be described with reference to FIG. 4.

Firstly, by referring to FIG. 4, an overview of the communication performed between the terminal device 60, the server 30, and the PC 10 in the case where an error occurs will be described for each of cases 1, 2, 3, 4, and 5. In each of cases 1, 2, 3, 4, and 5, different types of errors are to occur.

As described above, the controller 18 of the PC 10 monitors the occurrence of an error. In the case 1 of FIG. 4, the controller 18 of the PC 10 cannot acquire the target data from the terminal device 60 via the server 30. In this case, the controller 18 of the PC 10 determines that an error has occurred. In the case where the target data cannot be acquired from the terminal device 60 via the server 30, there is a possibility that some sort of error is occurring in the terminal device 60, the communication passage, or the like. Hereinbelow, the error as in the case 1 may in some cases be referred to as "data acquisition abnormality".

In the case 2 of FIG. 4, the server 30 outputs a Change-to-Disable notification to the PC 10. When the server 30 acquires a changing instruction for changing the state of the SIM card 64 from the Enable state to the Disable state from another device (not shown) different from the PC 10, the controller 32 of the server 30 changes the state of the SIM card 64 from the Enable state to the Disable state. In this case, the controller 32 of the server 30 outputs the Change-to-Disable notification indicating that the state of the SIM card 64 has been changed from the Enable state to the Disable state to the PC 10. The Change-to-Disable notification includes the SIM ID (s1) of the SIM card 64. When the Change-to-Disable notification is acquired, the controller 18 of the PC 10 determines that an error has occurred. When the state of the SIM card 64 of the terminal device 60 is changed from the Enable state to the Disable state while the user of the PC 10 is unaware, there may be an incident where the target data becomes unable to be acquired from the terminal device 60 while the user of the PC 10 is unaware. Hereinbelow, the error of the case 2 may in some cases be referred to as "Change to Disable".

In the case 3 of FIG. 4, the server 30 outputs the target data to the PC 10. Although not shown in FIG 2 and FIG. 4, the controller 18 of the PC 10 outputs a data amount request to the server 30 when the target data is acquired. When the data amount request is acquired, the controller 32 of the server 30 outputs data amount information that indicates the data amount of the target data acquired from the terminal device 60 (i.e., data amount of the target data outputted from the terminal device 60) to the PC 10. The controller 18 of the PC 10 compares the data amount of the target data actually acquired from the server 30 and the data amount of the target data indicated by the data amount information (data amount of the target data outputted from the terminal device 60). The controller 18 of the PC 10 determines that an error has occurred in a case where a difference of these two data amounts is equal to or more than a predetermined threshold set in advance. In the case where the difference between the data amount of the target data actually acquired from the server 30 and the data amount of the target data indicated by the data amount information exceeds the predetermined threshold set in advance, there is a possibility that a part of the target data had been lost during when it was outputted from the terminal device 60 to the PC 10 via the server 30 (e.g., packet loss). Hereinbelow, the error of the case 3 may in some cases be referred to as "data amount abnormality".

In the case 4 of FIG. 4, the server 30 outputs the target data to the PC 10. When the target data is acquired, the controller 18 of the PC 10 determines whether or not a location indicated by location information (GPS information) included in the target data is within a target area set in advance (e.g., Konan city, Aichi prefecture, Japan). In a case where the location indicated by the location information included in the target data is outside the target area, the controller 18 determines that an error has occurred. In a case where the terminal device 60 is present outside the target area set in advance, for example, there is a possibility that a trouble such as the terminal device 60 having been stolen and taken away to the outside of the target area is occurring. Hereinbelow, the error of the case 4 may in some cases be referred to as "area abnormality".

In the case 5 of FIG. 4, the server 30 outputs the target data to the PC 10. Although not shown in FIG. 2 and FIG 4, the controller 18 of the PC 10 confirms whether or not the information included in the target data is corrupted when the target data is acquired. Specifically, the controller 18 reads out a predeterminedly-determined portion of the information included in the target data. In a case where the read-out succeeds, the controller 18 determines that the information included in the target data is not corrupted. On the other hand, in a case where the read-out fails, the controller 18 determines that the information included in the target data is corrupted. In the case of being determined as that the information included in the target data is corrupted, the controller 18 determines that an error has occurred. In the case where the information included in the acquired target data is corrupted, there is a possibility that some sort of error is occurring in the terminal device, the communication passage or the like. Hereinbelow, the error as in the case 5 may in some cases be referred to as "data corruption".

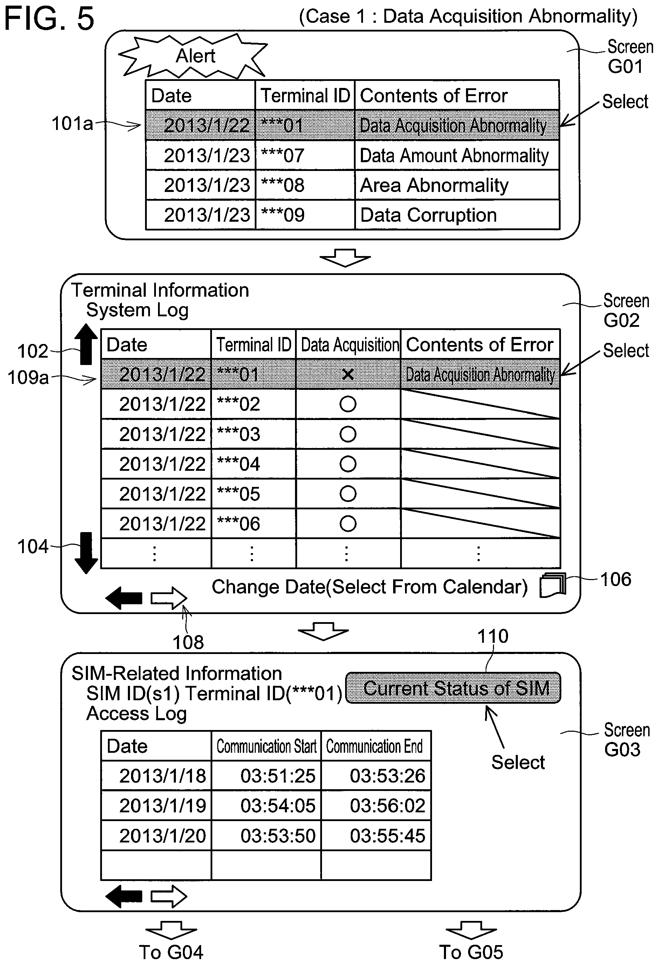

When one of the errors of the cases 1 to 5 occurs, the controller 18 creates display data for displaying that the error has occurred, and make the display unit 14 display an alert screen represented by the display data (e.g., screen G01 of FIG 5) (S20). Contents of the alert screen will be described later in detail.

The user operates the operation unit 12 to perform a predetermined selection operation of selecting one information from within the alert screen while the alert screen is displayed in the display unit 14. The predetermined selection operation is for example an operation to select combination information 101a in the screen G01 of FIG. 5. When the predetermined selection operation is performed, the controller 18 creates display data including information related to the communication of the target data from each of the terminal devices, and make the display unit 14 display a terminal information display screen represented by the display data (e.g., screen G02 of FIG. 5) (S22 of FIG. 4). Contents of the terminal information display screen will be described later in detail.

The user operates the operation unit 12 to perform a predetermined selection operation of selecting one information from within the terminal information display screen while the terminal information display screen is displayed in the display unit 14. The predetermined selection operation is for example an operation of selecting combination information 109a in the screen G02 of FIG. 5. When the predetermined selection operation is performed, the controller 18 references the memory 20 to specify the SIM ID (e.g., s1) corresponding to the terminal ID (e.g., ***01) included in the selected information. The controller 18 outputs SIM-related information request including the specified SIM ID to the server 30.

When the SIM-related information request is acquired, the controller 32 of the server 30 references the memory 34 to specify SIM-related information corresponding to the SIM ID (e.g., s1) included in the SIM-related information request. The controller 32 outputs the specified SIM-related information to the PC 10.

When the SIM-related information is acquired, the controller 18 of the PC 10 creates display data by using the SIM-related information, and makes the display unit 14 display a SIM-related screen represented by the display data (e.g., screen G03 of FIG. 5) (see S24 of FIG 4). The user can operate the operation unit 12 to input various instructions while the SIM-related screen is displayed in the display unit 14. The controller 18 changes display contents of the SIM-related screen displayed in the display unit 14 in accordance with inputted instructions (S24). Further, the controller 18 can perform a setting confirmation process of confirming settings related to the SIM card 64, or a setting change process of changing the settings related to the SIM card 64, in accordance with the inputted instructions (S24). The setting confirmation process and the setting change process will be described later. When the process of S24 of FIG 4 is completed, the communication in the error operation is terminated.

### (Specific examples of screen displayed in the display unit 14 of the PC 10 in error operation; FIG. 5 to FIG. 17)

Next, specific examples of the screen displayed in the display unit 14 of the PC 10 in cases where each of the errors in the cases 1 to 5 occurs will be described with reference to FIG 5 to FIG. 17.

### (Case 1; Data acquisition abnormality; FIG. 5 to FIG. 8)

As shown in the case 1 of FIG 4, the controller 18 of the PC 10 creates the display data by using the target data in the memory 20 upon determining that the error of data acquisition abnormality has occurred, and makes the display unit 14 display the alert screen as in the screen G01 of FIG. 5 based on the created display data (see S20 of FIG 4).

The screen G01 of FIG. 5 includes a message that an error has occurred ("Alert"). The screen G01 further displays a plurality of combination information (reference sign 101a etc. in the drawing) that combines a date when the error has occurred (e.g., 2013/1/22), the terminal ID of the terminal device related to the error (e.g., ***01), and the contents of the error (e.g., data acquisition abnormality). For example, the combination information 101a includes the date "2013/1/22", the terminal ID "***01", and the contents of error "data acquisition abnormality". That is, the combination information 101a indicates that the error of data acquisition abnormality had occurred on January 22, 2013 with the terminal device 60 corresponding to the terminal ID "***01". By looking at the alert screen, the user of the PC 10 can recognize the occurrence of the error.

The user of the PC 10 operates the operation unit 12 while the screen G01 of FIG. 5 is displayed in the display unit 14 to perform an operation to select the combination information 101a. When the combination information 101a is selected, the controller 18 creates the display data by using the target data in the memory 20, and makes the display unit 14 display the terminal information display screen as in the screen G02 of FIG. 5 based on the created display data (see S22 of FIG. 4).

The screen G02 of FIG. 5 includes information related to the communication of the target data with each of the terminal devices. The screen G02 displays a plurality of combination information (reference sign 109a etc. in the drawing) that combines a date (e.g., 2013/1/22), a terminal ID (e.g., ***01), a data acquisition (e.g., ×), and the contents of the error (e.g., data acquisition abnormality). The "data acquisition" in the screen G02 indicates whether or not the target data has been acquired from the terminal device of the corresponding terminal ID. Data acquisition "o" indicates that the target data has been acquired from the terminal device of the corresponding terminal ID. Data acquisition "×" indicates that the target data has not been acquired from the terminal device of the corresponding terminal ID.

The screen G02 further includes date switching buttons 102, 104 for switching dates of the combination information to be displayed. Further, the screen G02 includes a calendar button 106 for the user to select a date. The screen G02 further includes next/back buttons 108 for switching the screen display.

The user of the PC 10 operates the operation unit 12 while the screen G02 of FIG. 5 is displayed in the display unit 14 to perform an operation to select the combination information 109a. When the combination information 109a is selected, the controller 18 references the memory 20 and specifies the SIM ID (s1) corresponding to the terminal ID (***01) included in the selected combination information 109a. The controller 18 outputs a SIM-related information request including the specified SIM ID to the server 30.

When the SIM-related information request is acquired, the controller 32 of the server 30 references the memory 34 and specifies the SIM-related information corresponding to the SIM ID (s1) included in the SIM-related information request. The controller 32 outputs the specified SIM-related information to the PC 10.

When the SIM-related information is obtained, the controller 18 of the PC 10 creates display data using the SIM-related information, and makes the display unit 14 display the screen G03 of FIG. 5 represented by the display data (SIM-related screen) (see S24 of FIG. 4). The screen G03 of FIG. 5 includes the SIM-related information of the terminal device 60 that corresponds to the SIM ID "s1" and the terminal ID "***01". The screen G03 displays a plurality of combination information that combines a date (e.g., 2013/1/18), communication start time (e.g., 03:51:25), and communication end time (e.g., 03:53:45). Further, the screen G03 displays a button 110 for displaying the state of the terminal device 60 with the terminal ID "***01" corresponding to the SIM ID "s1".

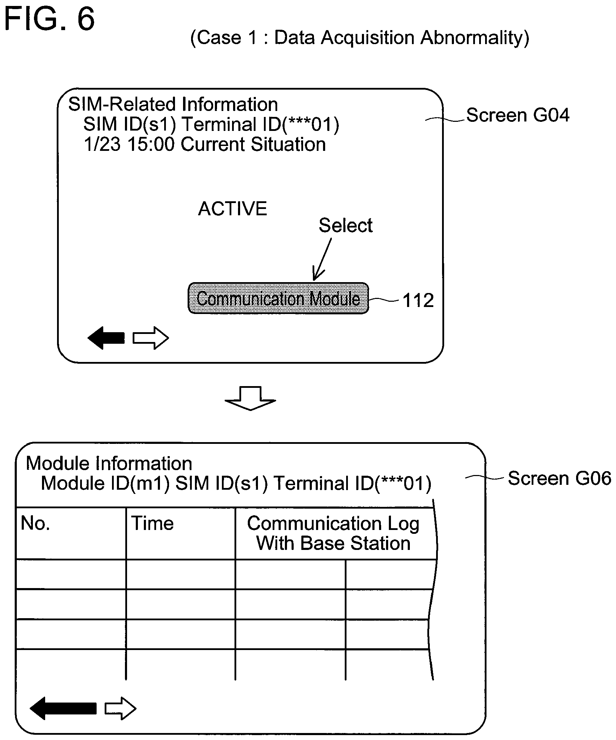

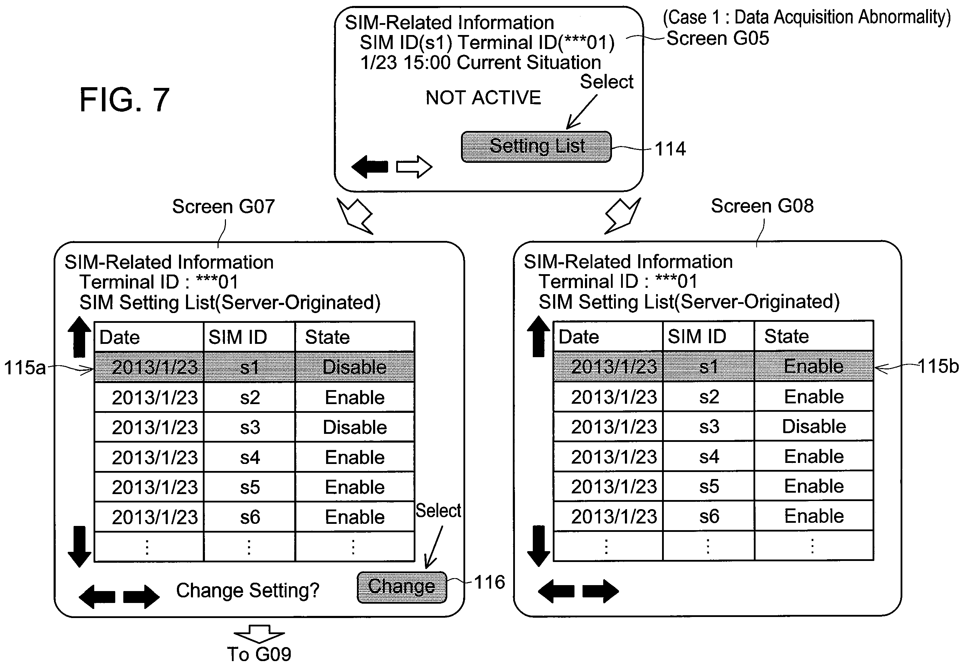

The user of the PC 10 operates the operation unit 12 to perform an operation to select the button 110 while the screen G03 of FIG. 5 is displayed in the display unit 14. When the button 110 is selected, the controller 18 makes the display unit 14 display a screen G04 of FIG. 6 or a screen G05 of FIG 7 according to the state (ACTIVE state or NOT ACTIVE state) of the terminal device 60 with the terminal ID "***01" corresponding to the SIM ID "s1".

### (Case where terminal device 60 is in ACTIVE state; FIG 6)

In a case where the terminal device 60 is in the ACTIVE state, the controller 18 makes the display unit 14 display the screen G04 of FIG. 6 (SIM-related screen) (see S24 of FIG. 4). This process is an example of the setting confirmation process of S24 of FIG. 4. The screen G04 includes a message indicating that the terminal device 60 is in the ACTIVE state. The screen G04 further displays a button 112 for displaying the state of the communication module 62 provided in the terminal device 60.

The user of the PC 10 operates the operation unit 12 to perform an operation to select the button 112 while the screen G04 of FIG 6 is displayed in the display unit 14. When the button 112 is selected, the controller 18 outputs a module information request to the terminal device 60. The module information request outputted by the PC 10 is outputted to the terminal device 60 via the server 30. When the module information request is acquired, the terminal device 60 outputs module information related to the communication performed by the communication module 62 to the PC 10. The module information outputted by the terminal device 60 is outputted to the PC 10 via the server 30.

When the module information is acquired, the controller 18 of the PC 10 creates display data by using the module information, and makes the display unit 14 display a module information display screen as in a screen G06 of FIG. 6 based on the created display data.

The screen G06 displays information related to the communication performed by the communication module 62 (module ID "m1") provided in the terminal device 60 (terminal ID "***01"). As shown in the drawing, the screen G06 displays a plurality of combination information that combines various types of information, such as a communication number (No.), communication time (Time), and communication log with a base station. This process also is an example of the setting confirmation process of S24 of FIG 4.

In a case where an error of data acquisition abnormality occurs despite the terminal device 60 being in the ACTIVE state (case where the screens G04, G06 of FIG. 6 are displayed), there is a possibility that some sort of error is occurring in the communication module 62. By looking at the screen G06, the user of the PC 10 can confirm whether or not a cause of the error is in the communication module 62 in the case where the error of the data acquisition abnormality occurs despite the SIM card 64 being in the Enable state. Accordingly, the user of the PC 10 can appropriately identify the cause of the error in the case where the error of data acquisition abnormality occurs.

### (Case where terminal device 60 is in NOT ACTIVE state; FIG. 7)

In a case where the terminal device 60 is in the NOT ACTIVE state, the controller 18 creates display data using the SIM-related information, and makes the display unit 14 display the screen G05 of FIG. 7 represented by the display data (SIM-related screen) (see S24 of FIG. 4). This process is also an example of the setting confirmation process of S24 of FIG. 4. The screen G05 includes a message indicating that the terminal device 60 is in the NOT ACTIVE state. The screen G05 further displays a button (setting list) 114 for displaying a list of settings for SIM cards corresponding to each SIM ID.

The user of the PC 10 operates the operation unit 12 to perform an operation to select the button 114 while the screen G05 of FIG. 7 is displayed in the display unit 14. When the button 114 is selected, the controller 18 references the SIM-related information, and makes the display unit 14 display a screen G07 or a screen G08 of FIG. 7 according to the state (Enable state or Disable state) of the SIM card 64 with the SIM ID "s1".

### (Case where SIM card 64 is in Disable state; Screen G07 of FIG. 7)

In a further case where the SIM card 64 with the SIM ID "s1" is in the Disable state when the terminal device 60 is in the NOT ACTIVE state (screen 05 of FIG. 7), the controller 18 makes the display unit 14 display the screen G07 of FIG 7 (SIM-related screen) (see S24 of FIG. 4). This process is an example of the setting confirmation process and the setting change process of S24 of FIG. 4. The screen G07 displays a plurality of combination information (such as reference sign 115a in the drawing, etc.) that combines a date (e.g., 2013/1/23), SIM ID (e.g., s1), and a state (e.g., Disable). The "state" in the drawing indicates the state of the SIM card (Enable state or Disable state). The screen G07 includes a changing button 116 for changing the state (setting) of the SIM ID.

In the case where the terminal device 60 is in the NOT ACTIVE state, as in the case of the screen G07, there is a possibility that the SIM card 64 is in the Disable state. By looking at the screen G07, the user of the PC 10 can recognize that the terminal device 60 is in the NOT ACTIVE state due to the SIM card 64 being in the Disable state. Thus, the user of the PC 10 can know that the SIM card 64 being in the Disable state is the cause of the data acquisition abnormality. Thus, the user of the PC 10 can appropriately identify the cause of the error in the event where the errors of the data acquisition abnormality occur.

The user of the PC 10 operates the operation unit 12 to perform an operation to select the combination information 115a while the screen G07 of FIG. 7 is displayed in the display unit 14, and performs an operation to select the changing button 116 in the state where the combination information 115a is being selected. When the changing button 116 is selected, the controller 18 switches the state of the SIM card 64 with the SIM ID "s1" included in the selected combination information 115a from the Disable state to the Enable state. In this case, furthermore, the controller 18 outputs a changing instruction for changing the state of the SIM card 64 from the Disable state to the Enable state to the server 30. When the changing instruction is acquired, the controller 32 of the server 30 changes the state of the SIM card 64 from the Disable state to the Enable state. When the state of the SIM card 64 is changed to the Enable state, the terminal device 60 comes to be in a state where the wireless communication provided by the carrier can be performed (ACTIVE state).

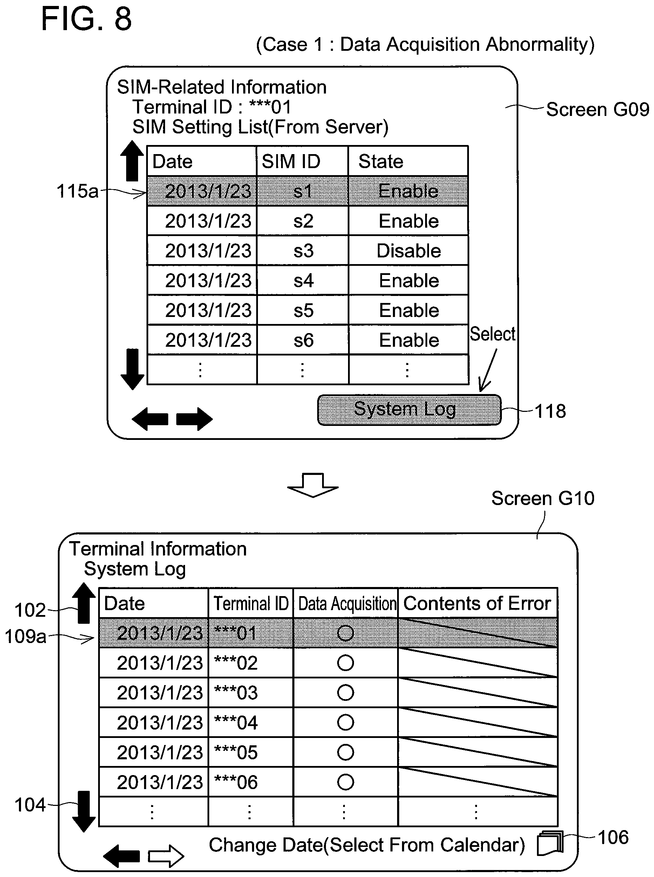

When the state of the SIM card 64 is changed from the Disable state to the Enable state, the controller 18 makes the display unit 14 display a screen G09 of FIG 8 (SIM-related screen) (see S24 of FIG. 4). This process is also an example of the setting confirmation process and the setting change process of S24 of FIG. 4. Display contents of the screen G09 are basically the same as those of the screen G07. However, in the screen G09, the setting included in the combination information 115a is changed to "Enable". Furthermore, the screen G09 includes a button (system log) 118 for displaying the terminal information display screen again.

The user of the PC 10 operates the operation unit 12 to perform an operation to select the button 118 while the screen G09 of FIG. 8 is displayed in the display unit 14. When the button 118 is selected, the controller 18 creates display data using the target data within the memory 20, and makes the display unit 14 display a terminal information display screen of a screen G10 of FIG. 8 based on the created display data (see S24 of FIG. 4). Upon this occasion, the controller 18 may acquire the latest target data from the terminal device 60 via the server 30 as needed. This process is also an example of the setting confirmation process and the setting change process of S24 of FIG. 4. Display contents of the screen G10 are basically the same as those of the screen G02 of FIG 5. However, in the screen G10, the data acquisition included in the combination information 109a is changed to "○" accompanying the state of the SIM card 64 having been changed to the Enable state. That is, the screen G10 indicates that the terminal device 60 has been changed to the ACTIVE state accompanying the change in the state of the SIM card 64 to the Enable state, and that a transition has been made to a state in which the target data can correctly be acquired from the terminal device 60.

Accordingly, by looking at the screen G10, the user of the PC 10 can know that the error of data acquisition abnormality has been resolved as a result of the change in the state of the SIM card 64 from the Disable state to the Enable state. The user of the PC 10 can appropriately know whether or not the error has been resolved after the necessary setting change has been made in the event where the error of data acquisition abnormality has occurred.

### (Case where SIM card 64 is in Enable state; Screen G08 of FIG 7)

In a further case where the SIM card 64 with the SIM ID "s1" is in the Enable state when the terminal device 60 is in the NOT ACTIVE state (screen G05 of FIG. 7), the controller 18 makes the display unit 14 display the screen G08 of FIG 7 (SIM-related screen) (see S24 of FIG. 4). This process is an example of the setting confirmation process of S24 of FIG. 4. Similar to the screen G07, the screen G08 displays a plurality of combination information (such as reference sign 115b in the drawing, etc.) that combines a date (e.g., 2013/1/23), SIM ID (e.g., s1), and a state (e.g., Enable).

In the case where the terminal device 60 is in the NOT ACTIVE state (screen G08 is displayed) despite the SIM card 64 being in the Enable state, there is a possibility that an abnormality has occurred in the terminal device 60 (e.g., power being off, or failure, etc.). By looking at the screen G08, the user of the PC 10 can recognize that the abnormality occurring in the terminal device 60 is the cause of the data acquisition abnormality. Thus, the user of the PC 10 can appropriately specify the cause of the error in the event where the errors of the data acquisition abnormality occur.

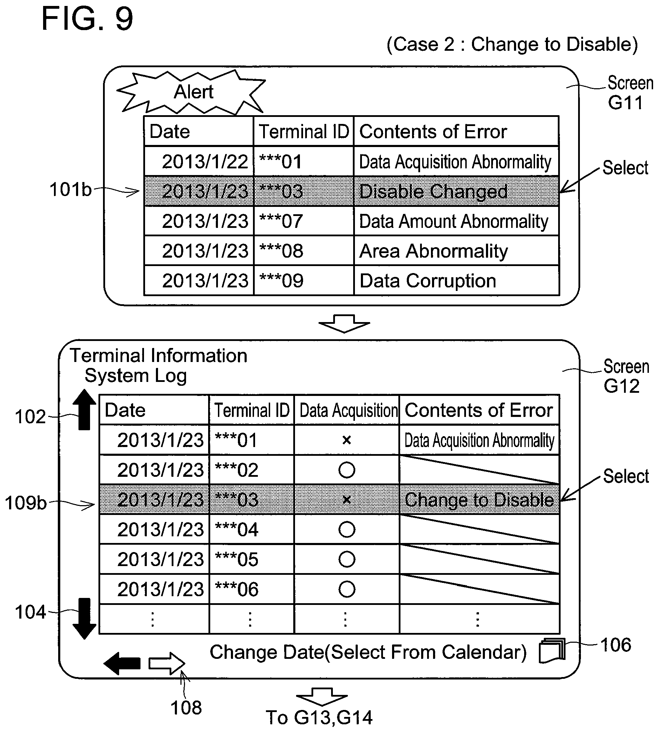

### (Case 2; Change to Disable; FIGS. 9 to 13)

As shown in the case 2 of FIG. 4, the controller 18 of the PC 10 creates the display data by using the target data in the memory 20 upon determining that the error of Change to Disable has occurred, and makes the display unit 14 display the alert screen as in a screen G11 of FIG. 9 based on the created display data (see S20 of FIG 4).

A configuration of the screen G11 of FIG 9 is in common with the configuration of the screen G01 of FIG. 5 (alert screen). Combination information 101b displayed in the screen G11 includes a date (e.g., 2013/1/23), the terminal ID of the terminal device related to the error (e.g., ***03), and the contents of the error "Change to Disable". That is, the combination information 101b indicates that the error of Change to Disable has occurred with the terminal device 80 corresponding to the terminal ID "***03" on January 23, 2013. By looking at the alert screen of the screen G11, the user of the PC 10 can recognize the occurrence of the error.

The user of the PC 10 operates the operation unit 12 while the screen G11 of FIG. 9 is displayed in the display unit 14 to perform an operation to select the combination information 101b. When the combination information 101b is selected, the controller 18 creates the display data by using the target data in the memory 20, and makes the display unit 14 display the terminal information display screen as in a screen G12 of FIG 9 based on the created display data (see S22 of FIG. 4).

A configuration of the screen G12 of FIG. 9 is in common with the configuration of the screen G02 of FIG. 5 (terminal information display screen). Combination information 109b displayed in the screen G12 includes a date (e.g., 2013/1/23), the terminal ID "***03", data acquisition "×", and the contents of the error "Change to Disable".

The user of the PC 10 operates the operation unit 12 while the screen G12 of FIG. 9 is displayed in the display unit 14 to perform an operation to select the combination information 109b. Similar to the case 1, when the combination information 109b is selected, the controller 18 references the memory 20 to specify the SIM ID (s3) corresponding to the terminal ID (***03) included in the selected combination information 109b. The controller 18 outputs a SIM-related information request including the specified SIM ID to the server 30. When the SIM-related information request is acquired, the controller 32 of the server 30 references the memory 34 to specify SIM-related information corresponding to the SIM ID (s3) included in the SIM-related information request. The controller 32 outputs the specified SIM-related information to the PC 10.

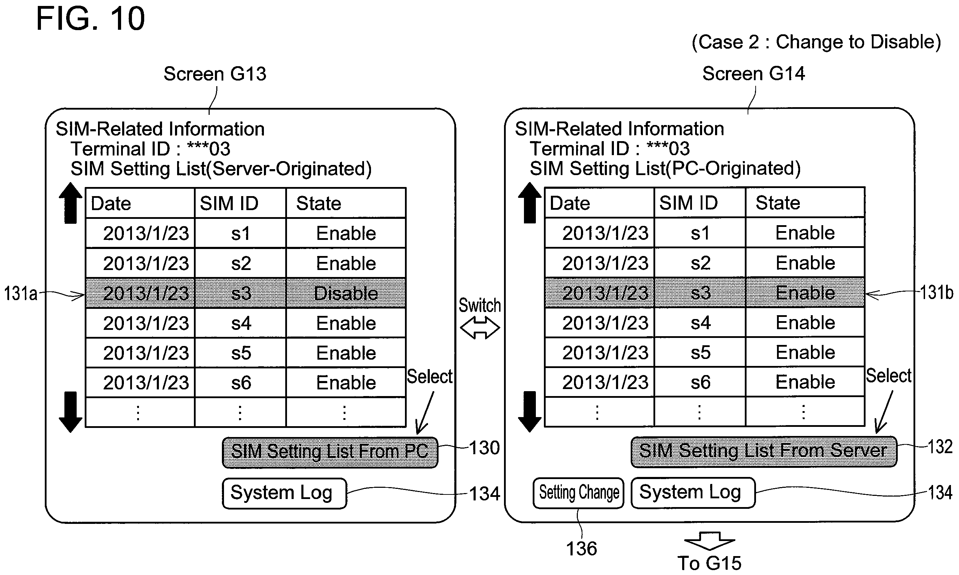

When the SIM-related information is acquired, the controller 18 of the PC 10 creates display data by using the SIM-related information, and makes the display unit 14 display a screen G13 of FIG. 10 (SIM-related screen) represented by the display data (see S24 of FIG. 4).

The screen G13 of FIG. 10 displays a state of each SIM card stored in the memory 34 of the server 30 (server-originated list of settings). Specifically, the screen G13 displays a plurality of combination information (reference sign 131a etc. in the drawing) that combines a date (e.g., 2013/1/23), the SIM ID (e.g., s3), and the state (e.g., Disable). In the screen G13, the combination information 131a including the SIM ID "s3" corresponding to the terminal ID "***03" is indicated in highlight. Due to this, by looking at the screen G13, the user of the PC 10 can recognize the SIM ID "s3" corresponding to the terminal ID "***03" of the terminal device 80, and that the state of the SIM card 84 with the SIM ID "s3" (state of the SIM card 84 which the server 30 stores) is in the Disable state.

The screen G13 further includes a display switching button 130 for displaying the state of each SIM card stored in the memory 20 of the PC 10 (PC-originated list of settings: see screen G14). The screen G13 further includes a button (system log) 134 for displaying the terminal information display screen again (screen G12 of FIG. 9).

The user of the PC 10 operates the operation unit 12 to perform an operation to select the display switching button 130 while the screen G13 of FIG. 10 is displayed in the display unit 14. When the display switching button 130 is selected, the controller 18 creates display data using the state of each SIM card stored in the memory 20, and makes the display unit 14 display a terminal information display screen of a screen G14 of FIG. 10 based on the created display data (S24 of FIG 4).

The screen G14 of FIG. 10 displays a state of each SIM card stored in the memory 20 of the PC 10 (PC-originated list of settings). Specifically, the screen G14 displays a plurality of combination information (reference sign 131b etc. in the drawing) that combines a date (e.g., 2013/1/23), the SIM ID (e.g., s3), and the state (e.g., Enable). In the screen G14 also, the combination information 131b including the SIM ID "s3" corresponding to the terminal ID "***03" is indicated in highlight Due to this, by looking at the screen G14, the user of the PC 10 can recognize the SIM ID "s3" corresponding to the terminal ID "***03" of the terminal device 80, and that the state of the SIM card 84 with the SIM ID "s3" (state of the SIM card 84 which the PC 10 stores) is in the Enable state.

The screen G14 further includes a display switching button 132 for displaying the state of each SIM card stored in the memory 34 of the server 30 (server-originated list of settings: see screen G13). When the user of the PC 10 operates the operation unit 12 to perform an operation to select the display switching button 132 while the screen G14 of FIG 10 is displayed in the display unit 14, the controller 18 makes the display unit 14 display the screen G13 (see S24 of FIG. 4). That is, the user can display the screen G13 and the screen G14 by switching them, by operating the display switching button 132 of the screen G14 and the display switching button 130 of the screen G13.

Furthermore, the screen G14 also includes a button (system log) 134 for displaying the terminal information display screen (screen G12 of FIG. 9) again.

Furthermore, the screen G14 includes a setting changing button 136 for changing the state of the SIM card. The user of the PC 10 operates the operation unit 12 to select the combination information 131b while the screen G14 of FIG. 10 is displayed in the display unit 14. The user further performs an operation to select the setting changing button 136 under the state in which the combination information 131b has been selected. When the setting changing button 136 is selected, the controller 18 outputs a changing instruction for changing the state of the SIM card 84 of the SIM ID "s3" included in the selected combination information 131b from the Disable state to the Enable state to the server 30. When the changing instruction is acquired, the controller 32 of the server 30 switches the state of the SIM card 84 of the SIM ID "s3" from the Disable state to the Enable state.

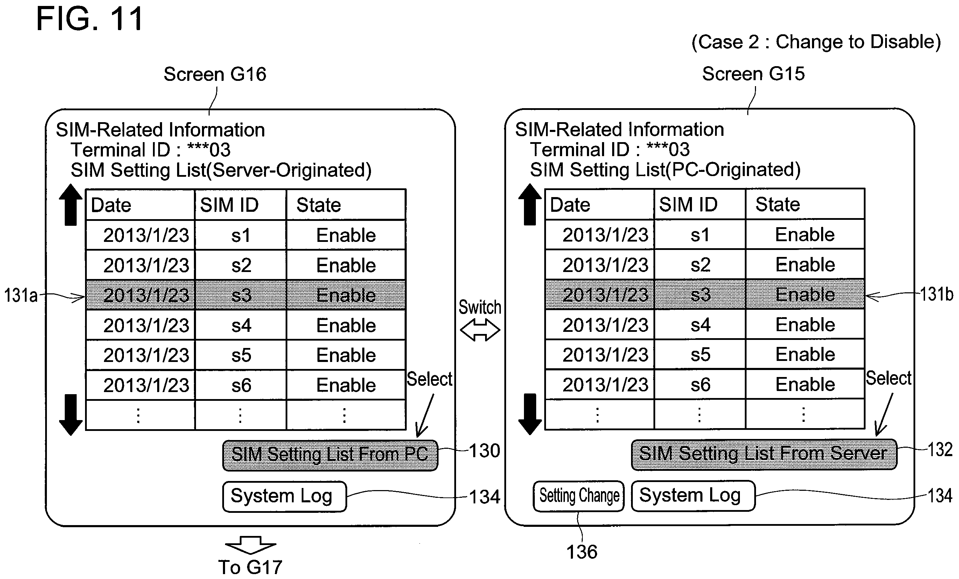

As a result of this, a screen G15 of FIG. 11 is displayed in the display unit 14 of the PC 10. Display contents of the screen G15 are similar to the display contents of the screen G14 of FIG 10. When the display switching button 132 of the screen G15 is operated, the controller 18 makes the display unit 14 display a screen G16. Display contents of the screen G16 are almost the same as the display contents of the screen G13 of FIG. 10. However, the state of the SIM card 84 of the SIM ID "s3" included in the combination information 131a is changed to "Enable". Due to this, by looking at the screen G16, the user of the PC 10 can recognize that the state of the SIM card 84 of the SIM ID "s3" has been changed from the Disable state to the Enable state.

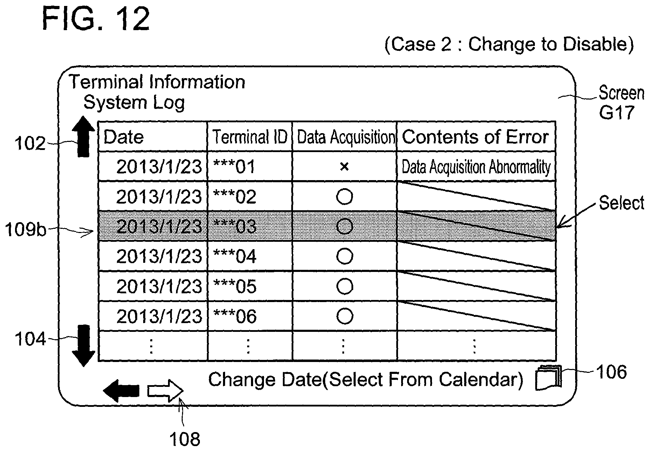

The user of the PC 10 operates the operation unit 12 to perform an operation to select the button 134 while the screen G16 of FIG 11 is displayed in the display unit 14. When the button 134 is selected, the controller 18 creates display data using the target data within the memory 20, and makes the display unit 14 display a terminal information display screen of a screen G17 of FIG. 12 based on the created display data (see S24 of FIG. 4). Upon this occasion, the controller 18 may acquire the latest target data from the terminal device 60 via the server 30 as needed. Display contents of the screen G17 are basically the same as those of the screen G12 of FIG. 9. However, in the screen G17, the data acquisition included in the combination information 109b is changed to "o" accompanying the state of the SIM card 84 having been changed to the Enable state. That is, the screen G17 indicates that the terminal device 60 has been changed to the ACTIVE state accompanying the change in the state of the SIM card 84 to the Enable state, and that a transition has been made to the state in which the target data can correctly be acquired from the terminal device 60.

By looking at the screen G17, the user of the PC 10 can know that the error of Change to Disable has been resolved as a result of the change in the state of the SIM card 84 from the Disable state to the Enable state. The user of the PC 10 can appropriately know whether or not the error has been resolved after the necessary setting change has been made in the event where the error of Change to Disable has occurred.

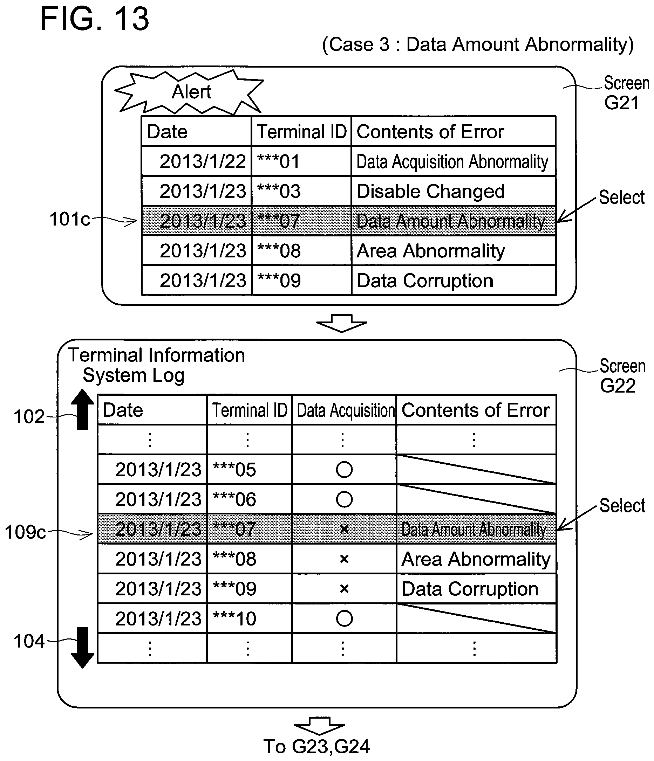

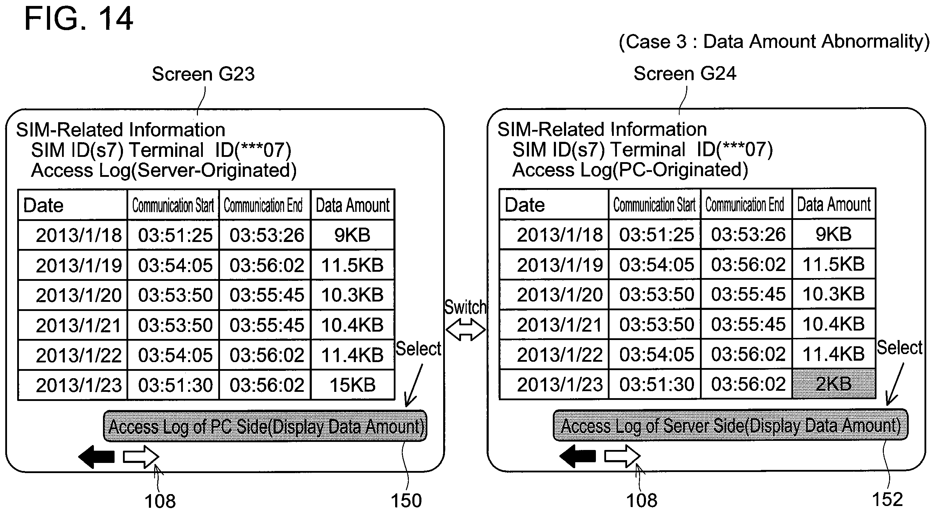

### (Case 3; Data amount abnormality; FIG. 13 and FIG. 14)

As shown in the case 3 of FIG. 4, the controller 18 of the PC 10 creates display data using the target data in the memory 20 when it determines that the error of data amount abnormality has occurred, and makes the display unit 14 display an alert screen of a screen G21 of FIG. 13 based on the created display data (see S20 of FIG. 4).

A configuration of the screen G21 of FIG. 13 is also in common with the configuration of the screen G01 of FIG 5 (alert screen). Combination information 101c displayed in the screen G21 includes a date (e.g., 2013/1/23), a terminal ID (e.g., ***07), and the contents of the error "data amount abnormality". That is, the combination information 101c indicates that the error of data amount abnormality has occurred with the terminal device (not shown) corresponding to the terminal ID "***07" on January 23, 2013. By looking at the alert screen of the screen G21, the user of the PC 10 can recognize the occurrence of the error.

The user of the PC 10 operates the operation unit 12 while the screen G21 of FIG 13 is displayed in the display unit 14 to perform an operation to select the combination information 101c. When the combination information 101c is selected, the controller 18 creates the display data by using the target data in the memory 20, and makes the display unit 14 display the terminal information display screen as in a screen G22 of FIG. 13 based on the created display data (see S22 of FIG. 4).

A configuration of the screen G22 of FIG. 13 is in common with the configuration of the screen G02 of FIG 5 (terminal information display screen). Combination information 109c displayed in the screen G22 includes a date (e.g., 2013/1/23), the terminal ID "***07", data acquisition "×", and the contents of the error "data amount abnormality".

The user of the PC 10 operates the operation unit 12 while the screen G22 of FIG. 13 is displayed in the display unit 14 to perform an operation to select the combination information 109c. Similar to the case 1, when the combination information 109c is selected, the controller 18 references the memory 20 to specify the SIM ID (s7) corresponding to the terminal ID (***07) included in the selected combination information 109c. The controller 18 outputs a SIM-related information request including the specified SIM ID to the server 30. When the SIM-related information request is acquired, the controller 32 of the server 30 references the memory 34 to specify SIM-related information corresponding to the SIM ID (s7) included in the SIM-related information request. The controller 32 outputs the specified SIM-related information to the PC 10.

When the SIM-related information is acquired, the controller 18 of the PC 10 creates display data by using the SIM-related information, and makes the display unit 14 display a screen G23 of FIG. 14 (SIM-related screen) represented by the display data (see S24 of FIG. 4).

The screen G23 of FIG. 14 displays a communication history with the terminal device with the SIM ID "s7" and the terminal ID "***07" stored in the memory 34 of the server 30 (server-originated access log). The screen G23 displays a plurality of combination information that combines a date (e.g., 2013/1/23), communication start time (e.g., 03:51:30), communication end time (e.g., 03:56:02), and a data amount (e.g., 15KB). The date indicates a date when the communication was started between the terminal device with the SIM ID "s7" and the terminal ID "***07" and the server 30. The communication start time and the communication completed time indicate the time when the communication started and ended between the terminal device with the SIM ID "s7" and the terminal ID "***07" and the server 30. The data amount indicates a data amount of the target data that the server 30 had acquired from the terminal device in that incident. By looking at the screen G23, the user of the PC 10 can recognize the date and time of the communication that took place in the past between the terminal device and the server 30, and the data amount of the target data that the server 30 had acquired from the terminal device in that incident (i.e., data amount of the target data that the terminal device had outputted to the server 30).

The screen G23 further includes a display switching button 150 for displaying a communication history with the terminal device with the SIM ID "s7" and the terminal ID "***07" stored in the memory 20 of the PC 10 (PC-originated access log; see screen G24). The screen G23 further includes next/back buttons 108 for switching the screen display.

The user of the PC 10 operates the operation unit 12 to perform an operation to select the display switching button 150 while the screen G23 is displayed in the display unit 14. When the display switching button 150 is selected, the controller 18 creates display data using the target data of the terminal device with the SIM ID "s7" and the terminal ID "***07" stored in the memory 20, and makes the display unit 14 display the screen G24 of FIG 14 represented by the display data (see S24 of FIG. 4).

The screen G24 displays a communication history with the terminal device with the SIM ID "s7" and the terminal ID "***07" stored in the memory 20 of the PC 10 (PC-originated access log). Similar to the screen G23, the screen G24 displays a plurality of combination information that combines a date (e.g., 2013/1/23), communication start time (e.g., 03:51:30), communication end time (e.g., 03:56:02), and a data amount (e.g., 2KB). The data amount in the screen G24 indicates a data amount of the target data that the PC 10 had acquired from the terminal device via the server 30 (i.e., target data that the PC 10 acquired from the server 30). By looking at the screen G24, the user of the PC 10 can recognize the date and time of the communication that took place in the past between the PC 10 and the server 30, and the data amount of the target data that the PC 10 had acquired from the server 30 in that incident.

The screen G24 further includes a display switching button 152 for displaying a communication history with the terminal device with the SIM ID "s7" and the terminal ID "***07" stored in the memory 34 of the server 30 (server-originated access log; see screen G23). The screen G24 further includes next/back buttons 108 for switching the screen display.

The user of the PC 10 operates the operation unit 12 to perform an operation to select the display switching button 152 while the screen G24 is displayed in the display unit 14. When the display switching button 152 is selected, the controller 18 makes the display unit 14 display the screen G23 as described above again (see S24 of FIG. 4).

The user can display the screen G23 and the screen G24 by switching them, by operating the display switching button 150 of the screen G23 and the display switching button 152 of the screen G24. By displaying the screens G23, G24 by switching them, the user of the PC 10 can compare the data amount of the target data outputted from the terminal device (data amount displayed in the screen G23) and the data amount of the target data that the PC 10 actually acquired from the server 30 (data amount displayed in the screen G24).

In the example of FIG. 14, when the screens G23, G24 are compared, the data amounts of the communication that took place on the date "2013/1/23" differ greatly between the screen G23 (15KB) and the screen G24 (2KB). That is, the data amount of the target data that the server 30 acquired from the terminal device (i.e., data amount of the target data outputted from the terminal device to the server 30; 15KB) and the data amount of the target data that the PC 10 acquired from the server 30 (i.e., the data mount of the target data outputted from the terminal device to the administration device via the server 30; 2KB) are different. In a case where the data amount of the target data outputted from the terminal device to the server and the data amount of the target data that the PC actually acquired from the server differ, for example, there is a possibility that a trouble such as a loss of a part of the target data (packet loss) has occurred while it is outputted from the terminal device to the PC 10 via the server 30. By looking at the screens G23, G24, the user of the PC 10 can appropriately recognize the possibility of the occurrence of the trouble. Further, it is also possible to estimate the date and time when the trouble occurred.

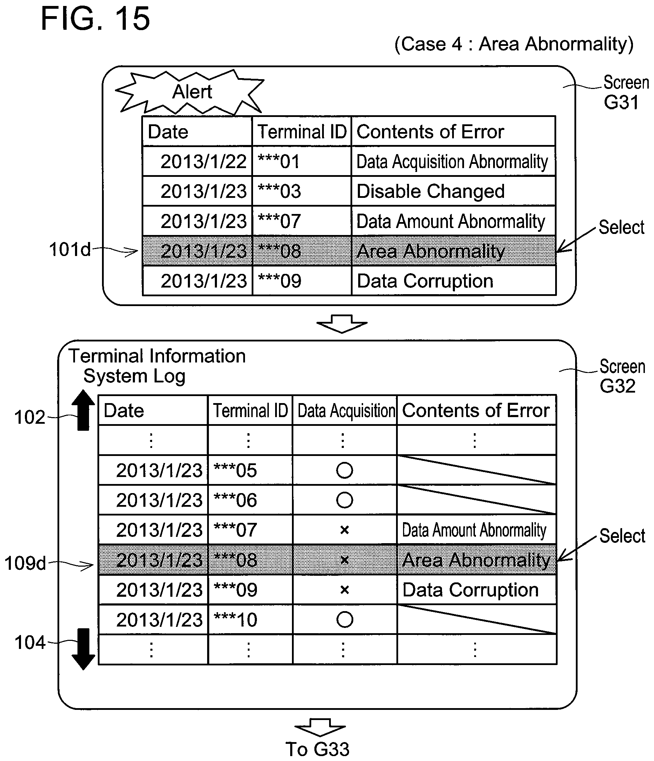

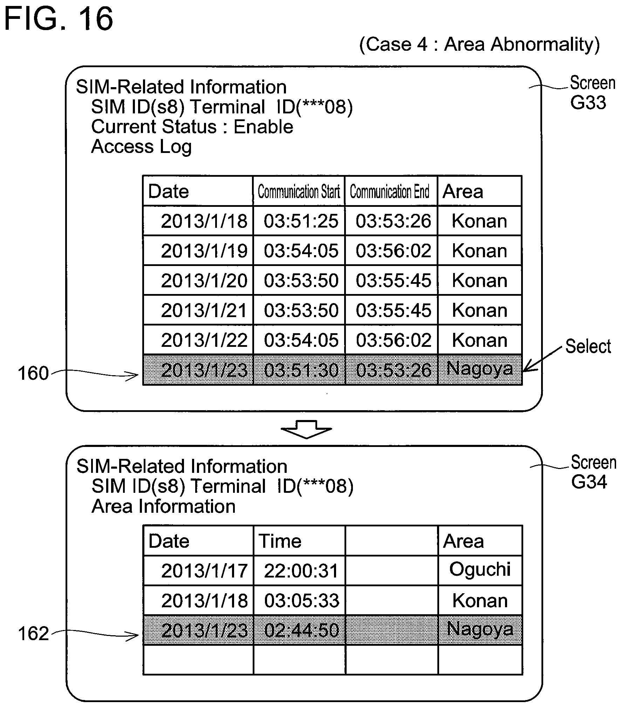

### (Case 4; Area abnormality; FIG. 15 and FIG. 16)

As shown in the case 4 of FIG. 4, the controller 18 of the PC 10 creates display data using the target data in the memory 20 when it determines that the error of area abnormality has occurred, and makes the display unit 14 display an alert screen of a screen G31 of FIG 15 based on the created display data (see S20 of FIG. 4).

A configuration of the screen G31 of FIG. 15 is in common with the configuration of the screen G01 of FIG. 5 (alert screen). Combination information 101d displayed in the screen G31 includes a date (e.g., 2013/1/23), a terminal ID (e.g., ***08), and the contents of the error "area abnormality". That is, the combination information 101d indicates that the error of area abnormality has occurred with the terminal device (not shown) corresponding to the terminal ID "***08" on January 23, 2013. By looking at the alert screen of the screen G31, the user of the PC 10 can recognize the occurrence of the error.

The user of the PC 10 operates the operation unit 12 while the screen G31 of FIG. 15 is displayed in the display unit 14 to perform an operation to select the combination information 101d. When the combination information 101d is selected, the controller 18 creates display data by using the target data in the memory 20, and makes the display unit 14 display the terminal information display screen as in a screen G32 of FIG. 15 based on the created display data (see S22 of FIG. 4).

A configuration of the screen G32 o FIG 15 is also in common with the configuration of the screen G02 of FIG. 5 (terminal information display screen). Combination information 109d displayed in the screen G32 includes a date (e.g., 2013/1/23), the terminal ID "***08", data acquisition "×", and the contents of the error "area abnormality".

The user of the PC 10 operates the operation unit 12 while the screen G32 of FIG. 15 is displayed in the display unit 14 to perform an operation to select the combination information 109d. Similar to the case 1, when the combination information 109d is selected, the controller 18 references the memory 20 to specify the SIM ID (s8) corresponding to the terminal ID (***08) included in the selected combination information 109d. The controller 18 outputs a SIM-related information request including the specified SIM ID to the server 30. When the SIM-related information request is acquired, the controller 32 of the server 30 references the memory 34 to specify SIM-related information corresponding to the SIM ID (s8) included in the SIM-related information request. The controller 32 outputs the specified SIM-related information to the PC 10.

When the SIM-related information is acquired, the controller 18 of the PC 10 creates display data by using the SIM-related information, and makes the display unit 14 display a screen G33 of FIG. 16 (SIM-related screen) represented by the display data (see S24 of FIG. 4).

The screen G33 of FIG. 16 displays a communication history with the terminal device with the SIM ID "s8" and the terminal ID "***08". Further, the screen G33 displays information that indicates that the state of the SIM card of the SIM ID "s8" is "Enable". The screen G33 displays a plurality of combination information (reference sign 160, etc. in the drawing) that combines a date (e.g., 2013/1/23), communication start time (e.g., 03:51:30), communication end time (e.g., 03:53:26), and area (e.g., Nagoya). In the screen G33, the combination information 160 including the area "Nagoya" is indicated in highlight. The highlighted display of the combination information 160 indicates that the area "Nagoya" is outside the predetermined area that is stored in the memory 20 in advance. Due to this, by looking at the screen G33, the user of the PC 10 can recognize that the terminal device corresponding to the SIM ID "s8" and the terminal ID "***08" is present outside the predetermined area.

The user of the PC 10 operates the operation unit 12 to perform an operation to select the combination information 160 while the screen G33 of FIG 16 is displayed in the display unit 14. When the combination information 160 is selected, the controller 18 creates display data using the SIM-related information, and makes the display unit 14 display a screen G34 of FIG. 16 (SIM-related screen) represented by the created display data (see S24 of FIG. 4).

The screen G34 of FIG. 16 displays an area history (area information) where the terminal device with the SIM ID "s8" and the terminal ID "***08" has existed. The screen G34 displays a plurality of combination information (reference sign 162 etc. in the drawing) that combines a date (e.g., 2013/1/23), time (e.g., 02:44:50), and an area (e.g., Nagoya). The date and time in the screen G34 indicate a date and time when the terminal device had started to exist within the corresponding area. Further, in the screen G34 also, the combination information 162 including the area "Nagoya" is indicated in highlight. The highlighted display of the combination information 162 indicates that the area "Nagoya" is outside the predetermined area that is stored in the memory 20 in advance. Due to this, by looking at the screen G34 also, the user of the PC 10 can recognize that the terminal device corresponding to the SIM ID "s8" and the terminal ID "***08" is present outside the predetermined area. In the case where the terminal device is present outside the target area set in advance, for example, there is a possibility that a trouble such as the terminal device having been stolen and taken away to the outside of the target area is occurring. Thus, the user of the PC 10 can appropriately recognize that a trouble had occurred to the terminal device.

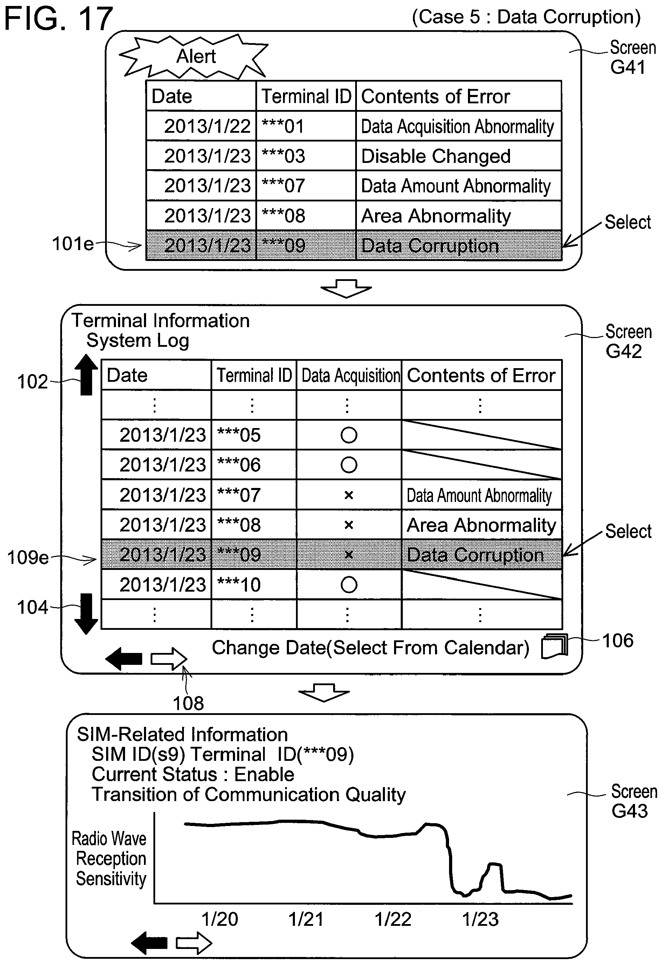

### (Case 5; Dada corruption; FIG. 17)

As shown in the case 5 of FIG 4, the controller 18 of the PC 10 creates display data using the target data in the memory 20 when it determines that the error of data corruption has occurred, and makes the display unit 14 display an alert screen of a screen G41 of FIG 17 based on the created display data (see S20 of FIG. 4).

A configuration of the screen G41 of FIG. 17 is in common with the configuration of the screen G01 of FIG. 5 (alert screen). Combination information 101e displayed in the screen G41 includes a date (e.g., 2013/1/23), a terminal ID (e.g., ***09), and the contents of the error "data corruption". That is, the combination information 101e indicates that the error of data corruption has occurred with the terminal device (not shown) corresponding to the terminal ID "***09" on January 23, 2013. By looking at the alert screen of the screen G41, the user of the PC 10 can recognize the occurrence of the error.

The user of the PC 10 operates the operation unit 12 while the screen G41 of FIG. 17 is displayed in the display unit 14 to perform an operation to select the combination information 101e. When the combination information 101e is selected, the controller 18 creates display data by using the target data in the memory 20, and makes the display unit 14 display the terminal information display screen as in a screen G42 of FIG. 17 based on the created display data (see S22 of FIG. 4).

A configuration of the screen G42 of FIG. 17 is in common with the configuration of the screen G02 of FIG. 5 (terminal information display screen). Combination information 109e displayed in the screen G42 includes a date (e.g., 2013/1/23), the terminal ID "***09", data acquisition "×", and the contents of the error "data corruption".

The user of the PC 10 operates the operation unit 12 while the screen G42 of FIG. 17 is displayed in the display unit 14 to perform an operation to select the combination information 109e. Similar to the case 1, when the combination information 109e is selected, the controller 18 references the memory 20 to specify the SIM ID (s9) corresponding to the terminal ID (***09) included in the selected combination information 109e. The controller 18 outputs a SIM-related information request including the specified SIM ID to the server 30. When the SIM-related information request is acquired, the controller 32 of the server 30 references the memory 34 to specify SIM-related information corresponding to the SIM ID (s9) included in the SIM-related information request. The controller 32 outputs the specified SIM-related information to the PC 10.

When the SIM-related information is acquired, the controller 18 of the PC 10 creates display data by using the SIM-related information, and makes the display unit 14 display a screen G43 of FIG. 17 (SIM-related screen) represented by the display data (see S24 of FIG. 4).

The screen G43 of FIG. 17 displays a graph that indicates transition of a communication quality with the terminal device with the SIM ID "s9" and the terminal ID "***09". A horizontal axis of the graph indicates the date. A vertical axis of the graph indicates a radio wave-receiving sensitivity. In the example of FIG 17, the radio wave-receiving sensitivity on January 23 had been unstable. In a case where information included in the acquired target data is corrupted, there is a possibility that some sort of error is occurring in the terminal device, communication passage, or the like. By looking at the screen G43 of FIG. 17, the user of the PC 10 can appropriately recognize that some sort of communication abnormality has occurred.

### (Effects of Present Embodiment)

In the above, the communication system 2 of the present embodiment has been described. As shown in S24 of FIG. 4, in the present embodiment, when the SIM-related information is acquired, the controller 18 of the PC 10 creates the display data by using the SIM-related information, and makes the display unit 14 display the SIM-related information display screen (e.g., screen G03 of FIG. 5) represented by the display data (S24 of FIG. 4). Due to this, according to the PC 10 of the present embodiment, the SIM-related information can appropriately be acquired from the server 30, and the SIM-related screen represented by the display data created using the SIM-related information can appropriately be displayed in the display unit 14. That is, the screen of high convenience for the user can appropriately be displayed in the display unit 14. As a result, a service with high convenience for the user can be provided.

As shown in S10 of FIG 2, in the case where the display instruction is inputted, the controller 18 creates the display data for displaying the target data by using the target data stored in the memory 20, and makes the display unit 14 display the target data display screen 90 (FIG 3) represented by that target data. Further, as shown in S20 of FIG. 4, when the error occurs, the controller 18 creates the display data for displaying the occurrence of the error, and makes the display unit 14 display the alert screen (e.g., screen G01 of FIG. 5) represented by that display data. Further, as shown in S22 of FIG. 4, when the predetermined selection operation is performed while the alert screen is displayed in the display unit 14, the controller 18 creates the display data including information related to the communication of the target data of each terminal device, and makes the display unit 14 display the terminal information display screen (e.g., screen G02 of FIG. 5) represented by that display data. Further, when the module information is acquired, the controller 18 creates the display data using the module information, and makes the display unit 14 display the module information display screen of the screen G06 of FIG. 6 based on the created display data. Further, when the button 118 is selected while the screen G09 of FIG. 7 is displayed in the display unit 14, the controller 18 creates the display data using the target data in the memory 20, and makes the display unit 14 display the terminal information display screen of the screen G10 of FIG. 8 based on the created display data.

As shown in S24 of FIG. 4, when the SIM-related information is acquired, the controller 18 creates display data using the SIM-related information, and makes the display unit 14 display the SIM-related information display screen (e.g., screen G03 of FIG. 5) represented by that display data. Further, when the button 110 in the screen G03 of FIG. 5 is selected, the controller 18 makes the display unit 14 display the screen G04 of FIG. 6 or the screen G05 of FIG. 7 according to the state of the terminal device 60 (ACTIVE state or NOT ACTIVE state). Further, when the button 112 is selected while the screen G05 of FIG. 7 is displayed in the display unit 14, the controller 18 references the SIM-related information and makes the display unit 14 display the screen G07 or the screen G08 of FIG 7 according to the state of the SIM card 64 with the SIM ID "s1" (Enable state or Disable state).

As above, the controller 18 creates the display data in accordance with situations, and can make the display unit 14 to appropriately display the screen represented by the display data. Due to this, the user who saw the screen displayed in the display unit 14 can become aware of the information appropriate for each situation.

As above, as shown in S10 of FIG. 2, in the case where the display instruction is inputted, the controller 18 creates the display data for displaying the target data by using the target data stored in the memory 20, and makes the display unit 14 display the target data display screen 90 (FIG. 3) represented by that target data. Accordingly, the user of the PC 10 can appropriately recognize the target data by looking at the target data display screen 90.

In the present embodiment, the user of the PC 10 can operate the operation unit 12 to input the changing instruction for changing the state of the SIM card 64. When the changing instruction is acquired via the operation unit 12, the controller 18 outputs the changing instruction for changing the state of the SIM card 64 to the server 30. That is, in the present embodiment, the user of the PC 10 can switch the state of the SIM card (Disable state or Enable state). Due to this, the user can not only verify the cause of the error conveniently, but also can identify the cause of the error, and resolve the error. As a result, the convenience for the user is improved.

In the present embodiment, the controller 18 monitors the occurrence of an error. In the case where an error has occurred, the controller 18 creates the display data for displaying the occurrence of the error, and makes the display unit 14 display the alert screen (screen G01 of FIG. 5) represented by that display data (S20 of FIG 4). Accordingly, the user of the PC 10 can appropriately become aware of the occurrence of the error by looking at the alert screen.

As shown in the case 1 of FIG. 4, in the present embodiment, in the case where the target data cannot be acquired from the terminal device 60 via the server 30, the controller 18 determines that the error of data acquisition abnormality has occurred. The controller 18 makes the display unit 14 display the alert screen (see screen G01 of FIG 5). In the case where the target data cannot be acquired from the terminal device 60 via the server 30, there is a possibility that some sort of error is occurring in the terminal device 60, the communication passage, or the like. In the present embodiment, the user of the PC 10 can appropriately be aware of the possibility that some sort of error has occurred.

As shown in the case 2 of FIG 4, in the present embodiment, in the case where the Change-to-Disable notification is acquired, the controller 18 determines that the error of Change to Disable has occurred. The controller 18 makes the display unit 14 display the alert screen (see screen G11 of FIG. 9). For example, there is a case where the state of the SIM card mounted on the terminal device 60 is changed from the Enable state to the Disable state while the user of the PC 10 is unaware. In such a case, there may be a circumstance in which the target data cannot be acquired from the terminal device 60 while the user of the PC 10 is unaware. In the present embodiment, the user of the PC 10 can appropriately be aware of the change in the state of the SIM card from the Enable state to the Disable state.

As shown in the case 3 of FIG. 4, in the present embodiment, in the case where the difference between the data amount of the target data actually acquired from the server 30 and the data amount of the target data indicated by the data amount information (data amount of the target data outputted from the terminal device 60) is equal to or greater than the predetermined threshold set in advance, the controller 18 determines that the error of data amount abnormality has occurred. The controller 18 makes the display unit 14 display the alert screen (see screen G21 of FIG. 13). In the case where the difference between the data amount of the target data actually acquired from the server 30 and the data amount of the target data indicated by the data amount information exceeds the predetermined threshold set in advance, there is a possibility that a part of the target data had been lost (e.g., packet loss) during when it was outputted from the terminal device 60 to the PC 10 via the server 30. In the present embodiment, the user of the PC 10 can appropriately be aware of the possibility that a trouble such as the part of the target data having been lost during when it was outputted from the terminal device to the PC 10 via the server 30.

As shown in the case 4 of FIG. 4, in the present embodiment, in the case where the location indicated by the location information included in the target data is outside the target area, the controller 18 determines that the error of area abnormality has occurred. The controller 18 makes the display unit 14 display the alert screen (see screen G31 of FIG. 15). In the case where the terminal device 60 is present outside the target area set in advance, for example, there is a possibility that a trouble such as the terminal device 60 having been stolen and taken away to the outside of the target area is occurring. In the present embodiment, the user of the PC 10 can appropriately be aware of the possibility that a trouble has occurred to the terminal device 60.

As shown in the case 5 of FIG. 4, in the present embodiment, in the case where the information included in the target data is corrupted, the controller 18 determines that the error of data corruption has occurred. The controller 18 makes the display unit 14 display the alert screen (see screen G41 of FIG. 17). In the case where the information included in the acquired target data is corrupted, there is a possibility that some sort of error is occurring in the terminal device, the communication passage, or the like. In the present embodiment, the user of the PC 10 can appropriately be aware of the possibility that some sort of error has occurred.

As shown in the screen G06 of FIG. 6, when the module information is acquired from the terminal device 60 via the server 30, the controller 18 creates the display data using the module information, and makes the display unit 14 display the module information display screen (screen G06 of FIG. 6) based on the created display data. Accordingly, the user of the PC 10 can appropriately recognize the module information by looking at the module information display screen.

### (Correspondence Relationship)

The PC 10 is an example of an "administration device". The SIM cards 64, 74, 84 are examples of a "subscriber identification information storage medium". The SIM-related information is an example of "subscriber-identification-information-related information". The module information is an example of "module-related information".

The respective display data for displaying the target data display screen 90 (FIG. 3), the alert screens (screen G01 of FIG. 5, screen G11 of FIG. 9, screen G21 of FIG 13, screen G31 of FIG. 15, screen G41 of FIG. 17), the terminal information display screens (screen G02 of FIG. 5, screen G10 of FIG. 8, screen G12 of FIG. 9, screen G17 of FIG 12, screen G22 of FIG 13, screen G32 of FIG 15, screen G42 of FIG. 17), the screen G14 of FIG. 10, the screen G15 of FIG. 11, and the screen G24 of FIG. 13 are examples of "terminal-related display data".

The target data display screen (FIG. 3), the alert screens (screen G01 of FIG. 5, screen G11 of FIG. 9, screen G21 of FIG. 13, screen G31 of FIG 15, screen G41 of FIG. 17), the terminal information display screens (screen G02 of FIG. 5, screen G10 of FIG 8, screen G12 of FIG 9, screen G17 of FIG. 12, screen G22 of FIG. 13, screen G32 of FIG. 15, screen G42 of FIG. 17), the screen G14 of FIG. 10, the screen G15 of FIG. 11, and the screen G24 of FIG. 13 are examples of a terminal-related screen".

The respective display data for displaying the screen G03 of FIG. 5, the screen G04 of FIG. 6, the screen G05, screen G07, screen G08 of FIG. 7, the screen G09 of FIG. 8, the screen G13 of FIG 10, the screen G16 of FIG 11, the screen G23 of FIG. 13, the screen G33, screen G34 of FIG 16, and the screen G43 of FIG. 17 are examples of "subscriber-identification-information-related display data".

The screen G03 of FIG 5, the screen G03 of FIG. 6, the screen G05, screen G07, screen G03 of FIG 7, the screen G09 of FIG. 8, the screen G13 of FIG 10, the screen G16 of FIG. 11, the screen G23 of FIG. 13, the screen G33, screen G34 of FIG. 16, and the screen G43 of FIG. 17 are examples of "subscriber-identification-information-related screen".

The display data for displaying the module information display screen (G06 of FIG. 6) is an example of "module-related display data". The module information display screen (G06 of FIG. 6) is an example of a "module-related screen".

The process of acquiring the target data from the terminal device 60 via the server 30 is an example of a process performed by a "first acquiring unit". The processes of S10 of FIG. 2 and S20, S22 of FIG 4 are examples of processes performed by a "first display controlling unit". The process of acquiring the SIM-related information from the server 30 is an example of a process performed by a "second acquiring unit". The process performed in S24 of FIG 4 is an example of a process performed by a "second display controlling unit". The process of acquiring the module information from the terminal device 60 is an example of a process performed by a "third acquiring unit". The process for displaying the module information display screen (G06 of FIG. 6) is an example of a process performed by a "third display controlling unit". The process of outputting the changing instruction for changing the state of the SIM card is an example of a process performed by a "changing instruction outputting unit". The case where the display instruction is inputted (FIG. 2), the cases where the errors occur (FIG. 4), the case where the predetermined selection operations are performed while the alert screen is displayed in the display unit 14, the case of acquiring the module information, and the case where the button 118 is selected while the screen G09 of FIG. 7 is displayed in the display unit 14 are examples of a "first situation" and a "second situation". The case where the SIM-related information is acquired (FIG 4), the case where the button 110 of the screen G03 of FIG. 5 is selected, and the case where the button 112 of the screen G05 of FIG. 7 is selected are examples of a "third situation" and a "fourth situation".

### (Second Embodiment)

As to a second embodiment, points that differ from the first embodiment will mainly be described. In the first embodiment, when an error occurs, the controller 18 of the PC 10 creates the display data using the target data, and makes the display unit 14 display the alert screen (e.g., screen G01 of FIG. 5) based on the created display data (see FIG 4). Instead of this, in the present embodiment, when an error occurs, the controller 18 acquires the SIM-related information of the terminal device (e.g., terminal device 60) being an error object from the server 30, creates the display data using the acquired SIM-related information, and makes the display unit 14 display a SIM-related alert screen (not shown) based on the created display data. In the present embodiment, the SIM-related alert screen at least includes the SIM-related information and a message and the like that indicates the occurrence of the error.

According to the present embodiment, the user of the PC 10 can appropriately recognize the occurrences of errors by looking at the SIM-related alert screens. The SIM-related alert screen of the present embodiment is an example of the "subscriber-identification-information-related screen". Speaking in general, in a case where it is determined by a determining unit that an error has occurred, a second display controlling unit may create subscriber-identification-information-related display data including the notification information that indicates the occurrence of error.

### (Third Embodiment)

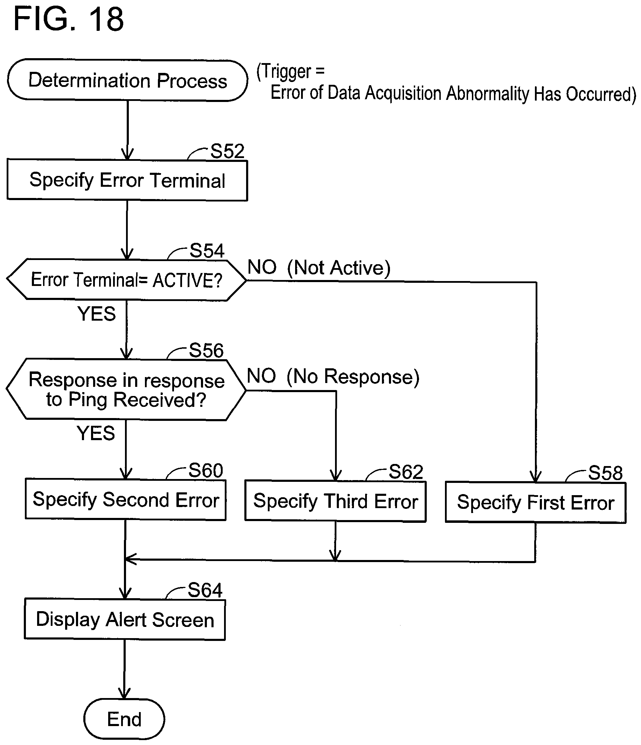

As to a third embodiment, points that differ from the first embodiment will mainly be described. In the present embodiment, contents of a process of the controller 18 of the PC 10 in a case where an error of data acquisition abnormality has occurred are different. In the present embodiment, in the case where an error of data acquisition abnormality has occurred, the controller 18 specifies a type of the error, and displays an alert screen including information that indicates the specified error type. Specifically, the controller 18 performs a determination process shown in FIG. 18.

When the PC 10 is activated, the controller 18 monitors an occurrence of the error of data acquisition abnormality. In a case where the target data cannot be acquired from one of the terminal devices via the server 30 (see FIG 4), the controller 18 determines that the error of data acquisition abnormality has occurred. In the present embodiment, in such a case, the controller 18 starts the determination process of FIG. 18.

In S52, the controller 18 specifies a terminal device in which the error of data acquisition abnormality is occurring (hereinbelow referred to as "error terminal"). Speaking more specifically, in S52, the controller 18 specifies a terminal ID and a SIM ID of the terminal device from which acquisition of the target data was not accomplished (i.e., error terminal). The terminal ID and SIM ID specified in S52 may in some cases be referred to as "error terminal ID" and "error SIM ID".

Next, in S54, the controller 18 determines whether or not a state of the error terminal is in an ACTIVE state. Speaking more specifically, in S54, the controller 18 outputs a SIM-related information request including the error SIM ID specified in S52 to the server 30, and acquired SIM-related information corresponding to the error SIM ID from the server 30. Then, the controller 18 determines whether or not the acquired SIM-related information includes information indicating that state of the error terminal is in the ACTIVE state. In a case where the acquired SIM-related information includes the information indicating that state of the error terminal is in the ACTIVE state, the controller 18 determines YES to S54 and proceeds to S56. On the other hand, in a case where the acquired SIM-related information does not include the information that state of the error terminal is in the ACTIVE state, the controller 18 determines NO to S54 and proceeds to S58. In the case of determining NO to S54, the error terminal is in an NOT ACTIVE state.

In S58, the controller 18 specifies that a first error is occurring in the error terminal. Speaking more specifically, the controller 18 makes the memory 20 store a first flag indicating that the first error is occurring, in association with the error terminal ID and the error SIM ID. When S58 is ended, the process proceeds to S64.

In the case where the occurrence of the first error is specified, the error terminal is in the NOT ACTIVE state. If the error terminal is in the NOT ACTIVE state, the error terminal will not respond to a Ping even if such a Ping is sent to the error terminal. Due to this, in this case, the process of S56 is skipped, and the process proceeds to S64.

On the other hand, in S56, the controller 18 determines whether or not the error terminal responds to the Ping. Speaking more specifically, in S56, the controller 18 sends a Ping to the error terminal via the server 30, and determines whether or not a response from the error terminal is received. If an abnormality is present in the communication passage and the like between the error terminal and the PC 10, the response to the Ping cannot be received from the error terminal. If no abnormality is present in the communication passage and the like between the error terminal and the PC 10, the controller 18 can receive the response to the Ping from the error terminal. In the case where a response signal from the error terminal is received, the controller 18 determines YES to S56 and proceeds to S60. On the other hand, if the response signal from the error terminal cannot be received, the controller 18 determines NO to S56 and proceeds to S62.

In S60, the controller 18 specifies that a second error is occurring in the error terminal. Speaking more specifically, the controller 18 makes the memory 20 store a second flag indicating that the second error is occurring, in association with the error terminal ID and the error SIM ED. When S60 is ended, the process proceeds to S64.

In the case where the occurrence of the second error is specified, the error terminal is in the ACTIVE state, and the controller 18 can receive the response to the Ping from the error terminal. The second error is a data acquisition abnormality that is caused by a presence of an abnormality in one of the functions of the error terminal other than a communication function with the PC 10. In the case where the second error is occurring, a possibility that no abnormality is present in the communication passage between the error terminal and the PC 10 is high. Further, a possibility of no abnormality is present in the function for performing communication with the PC 10 among the respective functions of the error terminal is also high. In the case where the second error is occurring, for example, there is a possibility that a cause thereof lies in the presence of an abnormality in a near field communication function and the like for collecting the target data from nearby luggages. More specifically, for example, the cause is assumed to be due to an abnormality in an application program used by the error terminal to collect the target data, disconnections of sensors attached to the luggages 66a, 66b and the like (see FIG. 1), loss of collected data due to a reset caused by some reason, a failure in the error terminal itself, and the like.

On the other hand, in S62, the controller 18 specifies that a third error is occurring in the error terminal. Speaking more specifically, the controller 18 makes the memory 20 store a third flag indicating that the third error is occurring, in association with the error terminal ID and the error SIM ID. When S62 is ended, the process proceeds to S64.

In the case where the occurrence of the third error is specified, the error terminal is in the ACTIVE state, but the controller 18 cannot receive the response to the Ping from the error terminal. The third error is a data acquisition abnormality that is caused by a presence of an abnormality in the communication passage between the error terminal and the PC 10, or in the function for performing communication between the error terminal and the PC 10. More specifically, for example, the cause is assumed to be due to a communication setting failure on an error terminal side, instability of communication, and the like.

In S64, the controller 18 creates display data for displaying an alert screen, and makes the display unit 14 display the alert screen represented by that display data. The controller 18 changes contents of the display data according to a type of the flag stored in the memory 20. The alert screen displays combination information that combines the error terminal ID and the error content. In the case where the first flag is stored in the memory 20, information indicating that the error content is the first error is displayed together with the error terminal ID. Similarly, in the case where the second flag is stored in the memory 20, information indicating that the error content is the second error is displayed together with the error terminal ID, and in the case where the third flag is stored in the memory 20, information indicating that the error content is the third error is displayed together with the error terminal ID. Accordingly, by looking at the alert screen displayed in the display unit in S64, the user of the PC 10 can recognize that the error of data acquisition abnormality has occurred in the error terminal, and a rough cause of the error of data acquisition abnormality. The user can investigate the details of the cause of the error by inputting various instructions to the PC 10 while the alert screen is displayed in the display unit 14. When S64 is ended, the determination process of FIG. 18 is ended.

According to the present embodiment, in the case where the error of data acquisition abnormality is occurring, the controller 18 of the PC 10 can specify which of the first, second, and third errors corresponds to that error, and create the display data for the alert screen in accordance with the result. By looking at the alert screen, the user of the PC 10 can recognize that the error of data acquisition abnormality has occurred in the error terminal, and the rough cause of the error of data acquisition abnormality. Work burden on the user for investigating the cause of the occurrence of the error can be reduced.

In the case where the first error is specified, the user can first check the setting of the SIM card, for example. As a result, if the SIM card is in the Disable state, a possibility that the SIM card being in the Disable state is the cause of the occurrence of the first error is high. Further, in a case where the SIM card is in the Enable state, a possibility that an occurrence of an abnormality in the error terminal itself (e.g., power off, failure, etc.) is the cause of the occurrence of the first error is high.

In the case where the second error is specified, the user can first see the system log of the terminal information (see screen G02 of FIG. 5), for example, and check the date when the data acquisition abnormality occurred, whether it is occurring on regular basis or by an accidental chance.

In the case where the third error is specified, the user can first check the communication setting of the terminal, for example. Further, data acquisition situations of other terminals in the same segment may be investigated, and a check on which of the terminals is experiencing the occurrence of the data acquisition abnormality.

All or a part of the checking process by the user as above may automatically be performed by the controller 18, and a result thereof may be displayed in the display unit 14. Further, according to the above embodiment, the controller 18 does not send the Ping in the case where the first error is specified in S58. Process load on the controller 18 can be lessened since the Ping to be wasted does not have to be sent. Further, cost burden accompanying the transmission of the Ping can also be reduced.

The first error of the present embodiment is an example of a "type of error that is different". The second error is an example of a "first specific type of error". The third error is an example of a "second specific type of error". The Ping is an example of a "confirmation signal". The response signal to the Ping is an example of a "response signal". The ACTIVE state and the NOT ACTIVE state are respectively an example of a "communication-available state" and a "communication-unavailable state". The process of sending the Ping to the error terminal in S56 is an example of a process performed by a "sending unit".

### (Variant 1 of Third Embodiment)

In the example of FIG. 18, the controller 18 performs two determinations, namely in S54 and S56, after having specified the error terminal in S52. In a variant, the controller 18 may perform only the determination of S54 and omit the determination of S56 after having specified the error terminal in S52. In this variant, in the case of determining YES to S54, the controller 18 specifies that the first error has occurred in the error terminal. Further, in the case of determining NO to S54, the controller 18 specifies that the second error or the third error has occurred in the error terminal. The first error in this variant is an example of a "type of error that is different". The second error and the third error are examples of a "specific type of error".

### (Variant 2 of Third Embodiment)

Further, in another variant, the controller 18 may perform only the determination of S56 without performing the determination of S54 after having specified the error terminal in S52. In this variant, in the case of determining YES to S56, the state of the error terminal is in ACTIVE, and the possibility of the absence of the abnormality in the communication passage between the error terminal and the PC 10 is high. The controller 18 may display information indicating such facts together with the error terminal ID in S64. On the other hand, in the case of determining NO to S56, the state of the error terminal is in NOT ACTIVE, or the possibility of the presence of the abnormality in the communication passage between the error terminal and the PC 10 is high. The controller 18 may display information indicating such facts together with the error terminal ID in S64.

As above, the respective embodiments have been described in detail, however, these are merely examples and do not limit the scope of the claims. The art described in the claims includes embodiments that contain modifications and alterations of the above-exemplified specific embodiments. For example, the following variants may be employed.

(Variant 1) In each of the above embodiments, the controller 18 of the PC 10 acquires the SIM-related information from the server 30 in the case where an error occurs. Thus, the memory 20 of the PC 10 does not store any SIM-related information. Instead of this, the controller 18 of the PC 10 may acquire the target data from the terminal device 60 via the server 30 once every predetermined time, and together with this, it may also acquire the SIM-related information from the server 30. In this case, the controller 18 of the PC 10 may make the memory 20 store the acquired target server and the SIM-related information.

(Variant 2) In each of the above embodiments, the PC 10 comprises the display unit 14 and the memory 20. Not being limited to this, the communication system 2 may comprise a display device, a storage device, a processing device, an administration device, and the like that are separate from the PC 10. In this case, the PC 10, the display device, the storage device, the processing device, and the administration device may be capable of communicating with each other via a network (cloud network). In this variant, the display device may acquire the target data and the SIM-related information from the PC 10, create the display data for displaying the respective screens, and display the screens in accordance with the display data. Further, the respective devices that can communicate via the network are not necessarily limited to a specific device, but two or more devices may cooperate. For example, the processing device that is available at that time (not in a process performing state) may be selected and used. The user may not be able to specify the device to be used.

(Variant 3) The PC 10 in each of the above embodiments may be configured of a plurality of devices. The display unit 14, the controller 18, and respective functions of the controller 18 may be divided by a plurality of devices. This variant is also an example of an "administration device".

(Variant 4) Further, the server 30 in each of the above embodiments may also be configured of a plurality of devices. That is, the server 30 in each of the above embodiments may comprise a plurality of servers (e.g., servers provided by each of a plurality of carriers). In this case, the controller 18 of the PC 10 may create the respective display data using the target data and the SIM-related information acquired from each of the plurality of servers. The controller 18 may make the display unit 14 display the respective screens based on the respective display data. For example, the controller 18 of the PC 10 can acquire target data outputted from a terminal device 60 via a first server provided by a carrier C1 from the terminal device 60 of a transport servicer T1, and can acquire SIM-related information corresponding to the terminal device 60 from the first server. On the other hand, the controller 18 of the PC 10 can acquire target data outputted from a terminal device 70 via a second server provided by a carrier C2 from the terminal device 70 of a transport servicer T2, and can acquire SIM-related information corresponding to the terminal device 70 from the second server. The controller 18 makes the display unit 14 display the respective screens based on the target data outputted from the terminal device 60, the target data outputted from the terminal device 70, the SIM-related information corresponding to the terminal device 60, and the SIM-related information corresponding to the terminal device 70.

(Variant 5) Further, in each of the above embodiments, an example in which the controller 18 of the PC 10 creates each of the display data has been described, however, the display data may be created in another device (server 30, etc.). The controller 18 of the PC 10 may acquire the display data from the other device, and make the display unit 14 display the screens based on the acquired display data.

(Variant 6) The administration device is not limited to the PC 10 in each of the above embodiments, and may be an arbitrary terminal device. For example, the administration device may be a portable terminal, such as a cell phone (e.g., smart phone), a PDA, a laptop PC, a tablet PC, a portable music player, or a portable movie player.

(Variant 7) The subscriber identification information storage medium is not limited to the SIM card in each of the above embodiments. The subscriber identification information storage medium is not limited to being a card so long as it is a storage medium that stores subscriber identification information, and it may be any arbitrary storage mediums such as an IC chip, a CD-ROM, or a DVD-ROM.

(Variant 8) In each of the above embodiments, the controller 18 acquires the target data from the server 30 once every predetermined time, creates the display data using the target data in accordance with user's instruction, and makes the display unit 14 display the target data display screen 90 (see FIG 3) represented by that display data (see S10 of FIG 2). Further, the controller 18 outputs the SIM-related information request to the server 30 in accordance with user's instruction in the cases where the respective errors of the cases 1 to 5 occur, acquires the SIM-related information, creates the display data using the acquired SIM-related information, and makes the display unit 14 display the SIM-related screen (see screen G03 of FIG. 5) represented by that display data (see S24 of FIG 4). Not being limited to this, the controller 18 may omit the creation of the display data using the target data and the SIM-related information. Further, the controller 18 may not make the display unit 14 display the target data display screen 90 (see FIG. 3) and the SIM-related screen (see screen G03 of FIG. 5). That is, the controller 18 may just acquire the target data from the server 30 once every predetermined time. Further, the controller 18 may just output the SIM-related information request to the server 30 and acquire the SIM-related information. Further, the controller 18 may determine whether or not an error has occurred, and just display the alert screen for notifying the occurrence of the error in the case of determining that the error has occurred.

Generally speaking, the administration device that administers the target data being the administration target may simply comprise a first acquiring unit, a second acquiring unit, a determining unit, and a notifying unit. The first acquiring unit may simply acquire the target data via the server from a terminal device in which a subscriber identification information storage medium is mounted. The second acquiring unit may simply acquire subscriber-identification-information-related information related to the subscriber identification information storage medium from the server. The subscriber-identification-information-related information may simply be information that is necessary for the server to bill the user of the subscriber identification information storage medium accompanying the communication of the target data. The determining unit may simply determine whether or not an error has occurred. The notifying unit may simply perform a predetermined notification-related process for notifying the occurrence of the error in the case where it is determined by the determining unit that the error has occurred.

## Claims

1. An administration device (10) comprising:
a display unit (14); and
a controller (18),
**characterized in that**
the controller (18) comprises:
a first acquiring unit configured to acquire target data via a server (30) from a terminal device (60, 70, 80) on which a subscriber identification information storage medium (64, 74, 84) is mounted, the target data being data acquired by the terminal device;
a first display controlling unit configured to create terminal-related display data by using the target data, the terminal-related display data including at least information related to a communication of the target data and representing a terminal-related screen, and to make the display unit (14) display the terminal-related screen represented by the terminal-related display data, the terminal-related screen showing at least the information related to a communication of the target data;
a second acquiring unit configured to acquire subscriber-identification-information-related information from the server (30), wherein the subscriber-identification-information-related information includes information necessary for the server to bill a user of the subscriber identification information storage medium (64, 74, 84) in association with the communication of the target data; and
a second display controlling unit configured to create subscriber-identification-information-related display data by using the subscriber-identification-information-related information, and to make the display unit (14) display a subscriber-identification-information-related screen represented by the subscriber-identification-information-related display data, the subscriber-identification-information-related screen showing the subscriber-identification-information-related information.

2. The administration device (10) as in claim 1, wherein
the first display controlling unit creates the terminal-related display data by using the target data.

3. The administration device (10) as in claim 1 or 2, wherein
the subscriber identification information storage medium (64, 74, 84) is set in one of a valid state and an invalid state,
the first acquiring unit acquires the target data via the server (30) from the terminal device (60, 70, 80) mounting the subscriber identification information storage medium (64, 74, 84) that is set in the valid state, and does not acquire the target data via the server (30) from the terminal device (60, 70, 80) mounting the subscriber identification information storage medium (64, 74, 84) that is set in the invalid state, and
the controller (18) further comprises a changing instruction outputting unit configured to output a changing instruction for changing a state of the subscriber identification information storage medium (64, 74, 84).

4. The administration device (10) as in any one of claims 1 to 3, wherein
the controller (18) further comprises a determining unit configured to determine whether an error has occurred or not, and
in a case where it is determined by the determining unit that the error has occurred, the first display controlling unit creates the terminal-related display data including notification information indicating that the error has occurred.

5. The administration device (10) as in any one of claims 1 to 3, wherein
the controller (18) further comprises a determining unit configured to determine whether an error has occurred or not, and
in a case where it is determined by the determining unit that the error has occurred, the second display controlling unit creates the subscriber-identification-information-related display data including notification information indicating that the error has occurred.

6. The administration device (10) as in claim 4 or 5, wherein
the determining unit determines that the error has occurred in a first case where the target data cannot be acquired from the terminal device via the server (30).

7. The administration device (10) as in claim 6, wherein
in the first case, the determining unit further determines that:
a specific type of error has occurred in a specific case where a state of the terminal device (60, 70, 80) is a communication-available state being a state capable of performing a wireless communication; and
a type of error that is different from the specific type of error has occurred in a case where the state of the terminal device (60, 70, 80) is a communication-unavailable state being a state incapable of performing the wireless communication.

8. The administration device (10) as in claim 7, wherein
the controller (18) further comprises:
a sending unit configured to send a confirmation signal to the terminal device (60, 70, 80) in the specific case, and
in the specific case, the determining unit further determines that:
a first specific type of error has occurred in a case where a response signal in response to the confirmation signal is received from the terminal device; and
a second specific type of error different from the first specific type of error has occurred in a case where the response signal is not received from the terminal device (60, 70, 80).

9. The administration device (10) as in any one of claims 4 to 8, wherein
the subscriber identification information storage medium (64, 74, 84) is set in one of a valid state and an invalid state,
the first acquiring unit acquires the target data via the server (30) from the terminal device (60, 70, 80) mounting the subscriber identification information storage medium (64, 74, 84) that is set in the valid state, and does not acquire the target data via the server (30) from the terminal device (60, 70, 80) mounting the subscriber identification information storage medium (64, 74, 84) that is set in the invalid state, and
the determining unit determines that the error has occurred in a second case where a state of the subscriber identification information storage medium (64, 74, 84) is changed from the valid state to the invalid state.

10. The administration device (10) as in any one of claims 4 to 9, wherein
the determining unit determines that the error has occurred in a third case where a difference between a first data amount of first target data outputted from the terminal device (60, 70, 80) to the server (30) and a second data amount of second target data acquired from the terminal device (60, 70, 80) via the server (30) is equal to or more than a predetermined amount.

11. The administration device (10) as in any one of claims 4 to 10, wherein
the determining unit determines that the error has occurred in a fourth case where the terminal device (60, 70, 80) exists outside of a predetermined area.

12. The administration device (10) as in any one of claims 4 to 11, wherein
the determining unit determines that the error has occurred in a fifth case where information included in the target data is corrupted.

13. The administration device (10) as in any one of claims 1 to 12, wherein
the controller (18) further comprises:
a third acquiring unit configured to acquire, from the terminal device (60, 70, 80) that further comprises a communication module (62, 72, 82), module-related information related to a process that the communication module (62, 72, 82) executes; and
a third display controlling unit configured to create module-related display data including at least the module-related information, and make the display unit display a module-related screen represented by the module-related display data.

14. A computer program for an administration device (10),
the administration device (10) comprising a display unit (14),
**characterized in that**
the computer program including instructions for causing a computer (18) mounted on the administration device (10) to perform:
a first acquiring process to acquire target data via a server (30) from a terminal device (60, 70, 80) on which a subscriber identification information storage medium (64, 74, 84) is mounted, the target data being data acquired by the terminal device;
a first display controlling process to create terminal-related display data by using the target data, the terminal-related display data at least including information relating to a communication of the target data and representing a terminal-related screen, and make the display unit (14) display the terminal-related screen represented by the terminal-related display data, the terminal-related screen showing at least the information related to a communication of the target data;
a second acquiring process to acquire subscriber-identification-information-related information from the server, wherein the subscriber-identification-information-related information includes information necessary for the server to bill a user of the subscriber identification information storage medium (64, 74, 84) in association with the communication of the target data; and
a second display controlling process to create subscriber-identification-information-related display data by using the subscriber-identification-information-related information, and to make the display unit (14) display a subscriber-identification-information-related screen represented by the subscriber-identification-information-related display data, the subscriber-identification-information-related screen showing the subscriber-identification-information-related information.

## Patentansprüche

1. Eine Verwaltungsvorrichtung (10) umfassend:
eine Anzeigeeinheit (14); und
eine Steuerung (18),
**dadurch gekennzeichnet, dass**
die Steuerung (18) umfasst:
eine erste Erwerbungseinheit, welche ausgestaltet ist, Zieldaten über einen Server (30) von einem Endgerät (60, 70, 80), in welchem ein Teilnehmeridentifikationsinformationenspeichermedium (64, 74, 84) montiert ist, zu erwerben, wobei die Zieldaten Daten sind, die von dem Endgerät erworben worden sind;
eine erste Anzeigesteuereinheit, welche ausgestaltet ist, endgerätbezogene Anzeigedaten durch Verwendung der Zieldaten zu erzeugen, wobei die endgerätbezogenen Anzeigedaten zumindest sich auf eine Kommunikation der Zieldaten beziehende Informationen umfassen und einen endgerätbezogenen Bildschirm repräsentieren, und die Anzeigeeinheit (14) zu veranlassen, den durch die endgerätbezogenen Anzeigedaten repräsentierten endgerätbezogenen Bildschirm anzuzeigen, wobei der endgerätbezogene Bildschirm zumindest die sich auf eine Kommunikation der Zieldaten beziehenden Informationen zeigt;
eine zweite Erwerbungseinheit, welche ausgestaltet ist, teilnehmeridentifikationsinformationenbezogene Informationen von dem Server (30) zu erwerben, wobei die teilnehmeridentifikationsinformationenbezogenen Informationen Informationen umfassen, die für den Server notwendig sind, um einem Benutzer des Teilnehmeridentifikationsinformationenspeichermediums (64, 74, 84) in Assoziation mit der Kommunikation der Zieldaten Rechnung zu stellen;
eine zweite Anzeigesteuereinheit, welche ausgestaltet ist, teilnehmeridentifikationsinformationenbezogene Anzeigedaten durch Verwendung der teilnehmeridentifikationsinformationenbezogenen Informationen zu erzeugen, und die Anzeigeeinheit (14) zu veranlassen, einen teilnehmeridentifikationsinformationenbezogenen Bildschirm anzuzeigen, der durch die teilnehmeridentifikationsinformationenbezogenen Anzeigedaten repräsentiert ist, wobei der teilnehmeridentifikationsinformationenbezogene Bildschirm die teilnehmeridentifikationsinformationenbezogenen Informationen zeigt.

2. Die Verwaltungsvorrichtung (10) wie in Anspruch 1, wobei
die erste Anzeigesteuereinheit die endgerätbezogenen Anzeigedaten durch Verwendung der Zieldaten erzeugt.

3. Die Verwaltungsvorrichtung (10) wie in Anspruch 1 oder 2, wobei
das Teilnehmeridentifikationsinformationenspeichermedium (64, 74, 84) in einen von einem gültigen Zustand und einem ungültigen Zustand gesetzt ist,
die erste Erwerbungseinheit die Zieldaten über den Server (30) von dem Endgerät (60, 70, 80), in welchem das Teilnehmeridentifikationsinformationenspeichermedium (64, 74, 84), das in den gültigen Zustand gesetzt ist, erwirbt und die Zieldaten über den Server (30) nicht von dem Endgerät (60, 70, 80), in welchem das Teilnehmeridentifikationsinformationenspeichermedium (64, 74, 84) montiert ist, das in den ungültigen Zustand gesetzt ist, erwirbt, und
die Steuerung (18) weiter eine Änderungsinstruktionsausgabeeinheit umfasst, welche ausgestaltet ist, eine Änderungsinstruktion zum Ändern eines Zustandes des Teilnehmeridentifikationsinformationenspeichermediums (64, 74, 84) ausgibt.

4. Die Verwaltungsvorrichtung (10) wie in einem der Ansprüche 1 bis 3, wobei
die Steuerung (18) weiter eine Ermittlungseinheit umfasst, welche ausgestaltet ist zu ermitteln, ob ein Fehler aufgetreten ist oder nicht, und
in einem Fall, in welchem es durch die Ermittlungseinheit ermittelt wird, dass der Fehler aufgetreten ist, die erste Anzeigesteuereinheit die endgerätbezogenen Anzeigedaten erzeugt, welche Benachrichtigungsinformationen umfassen, die angeben, dass der Fehler aufgetreten ist.

5. Die Verwaltungsvorrichtung (10) wie in einem der Ansprüche 1 bis 3, wobei
die Steuerung (18) weiter eine Ermittlungseinheit umfasst, welche ausgestaltet ist zu ermitteln, ob ein Fehler aufgetreten ist oder nicht, und
in einem Fall, in welchem es durch die Ermittlungseinheit ermittelt wird, dass der Fehler aufgetreten ist, die zweite Anzeigesteuereinheit die teilnehmeridentifikationsinformationenbezogenen Anzeigedaten erzeugt, welche Benachrichtigungsinformationen umfassen, die angeben, dass der Fehler aufgetreten ist.

6. Die Verwaltungsvorrichtung (10) wie in Anspruch 4 oder 5, wobei
die Ermittlungseinheit in einem ersten Fall, in welchem die Zieldaten nicht von dem Endgerät über den Server (30) erworben werden können, ermittelt, dass der Fehler aufgetreten ist.

7. Die Verwaltungsvorrichtung (10) wie in Anspruch 6, wobei
in dem ersten Fall, die Ermittlungseinheit weiter ermittelt, dass:
ein spezifischer Typ eines Fehlers in einem spezifischen Fall aufgetreten ist, in welchem ein Zustand des Endgeräts (60, 70, 80) ein Zustand verfügbarer Kommunikation ist, welcher ein Zustand ist, in dem es möglich ist, eine schnurlose Kommunikation durchzuführen; und
ein Typ eines Fehler, der unterschiedlich zu dem spezifischen Typ eines Fehlers ist, in einem Fall aufgetreten ist, in welchem der Zustand des Endgeräts (60, 70, 80) ein Zustand nichtverfügbarer Kommunikation ist, welcher ein Zustand ist, in dem es nicht möglich ist, die schnurlose Kommunikation durchzuführen.

8. Die Verwaltungsvorrichtung (10) wie in Anspruch 7, wobei
die Steuerung (18) weiter umfasst:
eine Sendeeinheit, welche ausgestaltet ist, in dem spezifischen Fall ein Bestätigungssignal an das Endgerät (60, 70, 80) zu senden, und
in dem spezifischen Fall die Ermittlungseinheit weiter ermittelt, dass:
ein erster spezifischer Typ eines Fehlers in einem Fall aufgetreten ist, in welchem ein Antwortsignal als Antwort auf das Bestätigungssignal von dem Endgerät empfangen wird; und
ein zweiter spezifischer Typ eines Fehler, der unterschiedlich zu dem ersten spezifischen Typ eines Fehlers ist, in einem Fall aufgetreten ist, in welchem das Antwortsignal nicht von dem Endgerät (60, 70, 80) empfangen wird.

9. Die Verwaltungsvorrichtung (10) wie in einem der Ansprüche 4 bis 8, wobei
das Teilnehmeridentifikationsinformationenspeichermedium (64, 74, 84) in einen von einem gültigen Zustand und einem ungültigen Zustand gesetzt ist,
die erste Erwerbungseinheit die Zieldaten über den Server (30) von dem Endgerät (60, 70, 80), in welchem das Teilnehmeridentifikationsinformationenspeichermedium (64, 74, 84), das in den gültigen Zustand gesetzt ist, montiert ist, erwirbt und die Zieldaten über den Server (30) von dem Endgerät (60, 70, 80), in welchem das Teilnehmeridentifikationsinformationenspeichermedium (64, 74, 84), das in den ungültigen Zustand gesetzt ist, montiert ist, nicht erwirbt, und
die Ermittlungseinheit in einem zweiten Fall, in welchem ein Zustand des Teilnehmeridentifikationsinformationenspeichermediums (64, 74, 84) von dem gültigen Zustand in den ungültigen Zustand geändert hat, ermittelt, dass der Fehler aufgetreten ist.

10. Die Verwaltungsvorrichtung (10) wie in einem der Ansprüche 4 bis 9, wobei
die Ermittlungseinheit in einem dritten Fall, in welchem ein Unterschied zwischen einer ersten Datenmenge von von dem Endgerät (60, 70, 80) an den Server (30) ausgegebenen ersten Zieldaten und einer zweiten Datenmenge von von dem Endgerät (60, 70, 80) über den Server (30) erworbenen zweiten Zieldaten gleich zu oder mehr als eine vorbestimmte Menge ist.

11. Die Verwaltungsvorrichtung (10) wie in einem der Ansprüche 4 bis 10, wobei
die Ermittlungseinheit in einem vierten Fall, in welchem das Endgerät (60, 70, 80) sich außerhalb eines vorbestimmten Bereichs befindet, ermittelt, dass der Fehler aufgetreten ist.

12. Die Verwaltungsvorrichtung (10) wie einem der Ansprüche 4 bis 11, wobei die Ermittlungseinheit in einem fünften Fall, in welchem in den Zieldaten enthaltene Informationen korrumpiert sind, ermittelt, dass der Fehler aufgetreten ist.

13. Die Verwaltungsvorrichtung (10) wie in einem der Ansprüche 1 bis 12, wobei
die Steuerung (18) weiter umfasst:
eine dritte Erwerbungseinheit, welche ausgestaltet ist, von dem Endgerät (60, 70, 80), das weiter ein Kommunikationsmodul (62, 72, 82) umfasst, modulbezogene Informationen, die sich auf einen Prozess beziehen, den das Kommunikationsmodul (62, 72, 82) ausführt, zu erwerben; und
eine dritte Anzeigesteuereinheit, welche ausgestaltet ist, modulbezogene Anzeigedaten, die zumindest die modulbezogenen Informationen umfassen, zu erzeugen, und die Anzeigeeinheit zu veranlassen, einen modulbezogenen Bildschirm anzuzeigen, der durch die modulbezogenen Anzeigedaten repräsentiert ist.

14. Ein Computerprogramm für eine Verwaltungsvorrichtung (10),
wobei die Verwaltungsvorrichtung (10) eine Anzeigeeinheit (14) umfasst,
**dadurch gekennzeichnet, dass**
das Computerprogramm Instruktionen umfasst, um einen Computer (18), der in der Verwaltungsvorrichtung (10) montiert ist, zu veranlassen durchzuführen:
einen ersten Erwerbungsprozess, um Zieldaten über einen Server (30) von einem Endgerät (60, 70, 80), in welchem ein Teilnehmeridentifikationsinformationenspeichermedium (64, 74, 84) montiert ist, zu erwerben, wobei die Zieldaten Daten sind, die von dem Endgerät erworben worden sind;
einen ersten Anzeigesteuerprozess, um endgerätbezogene Anzeigedaten durch Verwendung der Zieldaten zu erzeugen, wobei die endgerätbezogenen Anzeigedaten zumindest sich auf eine Kommunikation der Zieldaten beziehende Informationen umfassen und einen endgerätbezogenen Bildschirm repräsentieren, und die Anzeigeeinheit (14) zu veranlassen, den durch die endgerätbezogenen Anzeigedaten repräsentierten endgerätbezogenen Bildschirm anzuzeigen, wobei der endgerätbezogene Bildschirm zumindest die sich auf eine Kommunikation der Zieldaten beziehenden Informationen zeigt;
einen zweiten Erwerbungsprozess, um teilnehmeridentifikationsinformationenbezogene Informationen von dem Server zu erwerben, wobei die teilnehmeridentifikationsinformationenbezogenen Informationen Informationen umfassen, die für den Server notwendig sind, um einem Benutzer des Teilnehmeridentifikationsinformationenspeichermediums (64, 74, 84) in Assoziation mit der Kommunikation der Zieldaten Rechnung zu stellen; und
einen zweiten Anzeigesteuerprozess, um teilnehmeridentifikationsinformationenbezogene Anzeigedaten durch Verwendung der teilnehmeridentifikationsinformationenbezogenen Informationen zu erzeugen, und die Anzeigeeinheit (14) zu veranlassen, einen teilnehmeridentifikationsinformationenbezogenen Bildschirm anzuzeigen, der durch die teilnehmeridentifikationsinformationenbezogenen Anzeigedaten repräsentiert wird, wobei der teilnehmeridentifikationsinformationenbezogene Bildschirm die teilnehmeridentifikationsinformationenbezogenen Informationen zeigt.

## Revendications

1. Dispositif d'administration (10) comprenant :
une unité d'affichage (14); et
un dispositif de commande (18),
**caractérisé en ce que**
le dispositif de commande (18) comprend :
une première unité d'acquisition configurée pour acquérir des données cibles par le biais d'un serveur (30) à partir d'un dispositif terminal (60, 70, 80) sur lequel un support de stockage d'informations d'identification d'abonné (64, 74, 84) est monté, les données cibles étant des données acquises par le dispositif terminal ;
une première unité de commande d'affichage configurée pour créer des données d'affichage relatives au terminal en utilisant les données cibles, les données d'affichage relatives au terminal incluant au moins des informations relatives à une communication des données cibles et représentant un écran relatif au terminal, et pour faire afficher à l'unité d'affichage (14) l'écran relatif au terminal représenté par les données d'affichage relatives au terminal, l'écran relatif au terminal présentant au moins les informations relatives à une communication des données cibles ;
une deuxième unité d'acquisition configurée pour acquérir des informations relatives aux informations d'identification d'abonné à partir du serveur (30), dans lesquelles les informations relatives aux informations d'identification d'abonné incluent des informations nécessaires au serveur pour facturer un utilisateur du support de stockage d'informations d'identification d'abonné (64, 74, 84) en association avec la communication des données cibles ; et
une deuxième unité de commande d'affichage configurée pour créer des données d'affichage relatives aux informations d'identification d'abonné en utilisant les informations relatives aux informations d'identification d'abonné, et pour faire afficher à l'unité d'affichage (14) un écran relatif aux informations d'identification d'abonné représenté par les données d'affichage relatives aux informations d'identification d'abonné, l'écran relatif aux informations d'identification d'abonné présentant les informations relatives aux informations d'identification d'abonné.

2. Dispositif d'administration (10) selon la revendication 1, dans lequel
la première unité de commande d'affichage crée les données d'affichage relatives au terminal en utilisant les données cibles.

3. Dispositif d'administration (10) selon la revendication 1 ou 2, dans lequel
le support de stockage d'informations d'identification d'abonné (64, 74, 84) est établi dans l'un d'un état valide et d'un état invalide,
la première unité d'acquisition acquiert les données cibles par le biais du serveur (30) à partir du dispositif terminal (60, 70, 80) montant le support de stockage d'informations d'identification d'abonné (64, 74, 84) qui est établi dans l'état valide, et n'acquiert pas les données cibles par le biais du serveur (30) à partir du dispositif terminal (60, 70, 80) montant le support de stockage d'informations d'identification d'abonné (64, 74, 84) qui est établi dans l'état invalide, et
le dispositif de commande (18) comprend en outre une unité de délivrance d'instruction de changement configurée pour délivrer une instruction de changement pour changer un état du support de stockage d'informations d'identification d'abonné (64, 74, 84).

4. Dispositif d'administration (10) selon l'une quelconque des revendications 1 à 3, dans lequel
le dispositif de commande (18) comprend en outre une unité de détermination configurée pour déterminer si une erreur s'est ou non produite, et
dans un cas où il est déterminé par l'unité de détermination que l'erreur s'est produite, la première unité de commande d'affichage crée les données d'affichage relatives au terminal en incluant des informations de notification indiquant que l'erreur s'est produite.

5. Dispositif d'administration (10) selon l'une quelconque des revendications 1 à 3, dans lequel
le dispositif de commande (18) comprend en outre une unité de détermination configurée pour déterminer si une erreur s'est ou non produite, et
dans un cas où il est déterminé par l'unité de détermination que l'erreur s'est produite, la deuxième unité de commande d'affichage crée les données d'affichage relatives aux informations d'identification d'abonné en incluant des informations de notification indiquant que l'erreur s'est produite.

6. Dispositif d'administration (10) selon la revendication 4 ou 5, dans lequel
l'unité de détermination détermine que l'erreur s'est produite dans un premier cas où les données cibles ne peuvent pas être acquises à partir du dispositif terminal par le biais du serveur (30).

7. Dispositif d'administration (10) selon la revendication 6, dans lequel
dans le premier cas, l'unité de détermination détermine en outre que :
un type spécifique d'erreur s'est produit dans un cas spécifique où un état du dispositif terminal (60, 70, 80) est un état disponible pour la communication qui est un état capable d'effectuer une communication sans fil ; et
un type d'erreur, qui est différent du type spécifique d'erreur, s'est produit dans un cas où l'état du dispositif terminal (60, 70, 80) est un état non disponible pour la communication qui est un état incapable d'effectuer la communication sans fil.

8. Dispositif d'administration (10) selon la revendication 7, dans lequel
le dispositif de commande (18) comprend en outre :
une unité de transmission configurée pour transmettre un signal de confirmation au dispositif terminal (60, 70, 80) dans le cas spécifique, et
dans le cas spécifique, l'unité de détermination détermine en outre que :
un premier type spécifique d'erreur s'est produit dans un cas où un signal de réponse en réponse au signal de confirmation est reçu à partir du dispositif terminal ; et
un second type spécifique d'erreur différent du premier type spécifique d'erreur s'est produit dans un cas où le signal de réponse n'est pas reçu à partir du dispositif terminal (60, 70, 80).

9. Dispositif d'administration (10) selon l'une quelconque des revendications 4 à 8, dans lequel
le support de stockage d'informations d'identification d'abonné (64, 74, 84) est établi dans l'un d'un état valide ou d'un état invalide,
la première unité d'acquisition acquiert les données cibles par le biais du serveur (30) à partir du dispositif terminal (60, 70, 80) montant le support de stockage d'informations d'identification d'abonné (64, 74, 84) qui est établi dans l'état valide, et n'acquiert pas les données cibles par le biais du serveur (30) à partir du dispositif terminal (60, 70, 80) montant le support de stockage d'informations d'identification d'abonné (64, 74, 84) qui est établi dans l'état invalide, et
l'unité de détermination détermine que l'erreur s'est produite dans un deuxième cas où un état du support de stockage d'informations d'identification d'abonné (64, 74, 84) est changé de l'état valide à l'état invalide.

10. Dispositif d'administration (10) selon l'une quelconque des revendications 4 à 9, dans lequel
l'unité de détermination détermine que l'erreur s'est produite dans un troisième cas où une différence entre une première quantité de données de premiers données cibles délivrées à partir du dispositif terminal (60, 70, 80) au serveur (30) et une seconde quantité de données de secondes données cibles acquises à partir du dispositif terminal (60, 70, 80) par le biais du serveur (30) est égale ou supérieure à une quantité prédéterminée.

11. Dispositif d'administration (10) selon l'une quelconque des revendications 4 à 10, dans lequel
l'unité de détermination détermine que l'erreur s'est produite dans un quatrième cas où le dispositif terminal (60, 70, 80) se trouve à l'extérieur d'une zone prédéterminée.

12. Dispositif d'administration (10) selon l'une quelconque des revendications 4 à 11, dans lequel
l'unité de détermination détermine que l'erreur s'est produite dans un cinquième cas où des informations incluses dans les données cibles sont corrompues.

13. Dispositif d'administration (10) selon l'une quelconque des revendications 1 à 12, dans lequel
le dispositif de commande (18) comprend en outre :
une troisième unité d'acquisition configurée pour acquérir, à partir du dispositif terminal (60, 70, 80) qui comprend en outre un module de communication (62, 72, 82), des informations relatives au module relatives à un processus que le module de communication (62, 72, 82) exécute ; et
une troisième unité de commande d'affichage configurée pour créer des données d'affichage relatives au module incluant au moins des informations relatives au module, et faire afficher à l'unité d'affichage un écran relatif au module représenté par les données d'affichage relatives au module.

14. Programme informatique pour un dispositif d'administration (10),
le dispositif d'administration (10) comprenant une unité d'affichage (14),
**caractérisé en ce que**
le programme informatique inclut des instructions pour amener un ordinateur (18) monté sur le dispositif d'administration (10) à effectuer :
un premier processus d'acquisition pour acquérir des données cibles par le biais d'un serveur (30) à partir d'un dispositif terminal (60, 70, 80) sur lequel un support de stockage d'informations d'identification d'abonné (64, 74, 84) est monté, les données cibles étant des données acquises par le dispositif terminal ;
un premier processus de commande d'affichage pour créer des données d'affichage relatives au terminal en utilisant les données cibles, les données d'affichage relatives au terminal incluant au moins des informations relatives à une communication des données cibles et représentant un écran relatif au terminal, et pour faire afficher à l'unité d'affichage (14) l'écran relatif au terminal représenté par les données d'affichage relatives au terminal, l'écran relatif au terminal présentant au moins les informations relatives à une communication des données cibles ;
un second processus d'acquisition pour acquérir des informations relatives aux informations d'identification d'abonné à partir du serveur, dans lequel les informations relatives aux informations d'identification d'abonné incluent des informations nécessaires au serveur pour facturer un utilisateur du support de stockage d'informations d'identification d'abonné (64, 74, 84) en association avec la communication des données cibles ; et
un second processus de commande d'affichage pour créer des données d'affichage relatives aux informations d'identification d'abonné en utilisant les informations relatives aux informations d'identification d'abonné, et pour faire afficher à l'unité d'affichage (14) un écran relatif aux informations d'identification d'abonné représenté par les données d'affichage relatives aux informations d'identification d'abonné, l'écran relatif aux informations d'identification d'abonné présentant les informations relatives aux informations d'identification d'abonné.
